Europäisches Patentamt

European Patent Office

Office européen des brevets

(11) Veröffentlichungsnummer: **0 603 236 B1**

(12) **EUROPÄISCHE PATENTSCHRIFT**

(45) Veröffentlichungstag der Patentschrift: **29.11.95**

(51) Int. Cl.6: **C08F 216/14**, C11D 3/37

(21) Anmeldenummer: **92918765.6**

(22) Anmeldetag: **04.09.92**

(86) Internationale Anmeldenummer:
**PCT/EP92/02041**

(87) Internationale Veröffentlichungsnummer:
**WO 93/06142 (01.04.93 93/09)**

(54) COPOLYMERISATE VON HYDROXYALKYLVINYLETHERN UND VERWENDUNG VON HOMO- UND COPOLYMERISATEN VON HYDROXYALKYLVINYLETHERN IN WASCH- UND REINIGUNGSMITTELN.

(30) Priorität: **13.09.91 DE 4130428**

(43) Veröffentlichungstag der Anmeldung:
**29.06.94 Patentblatt 94/26**

(45) Bekanntmachung des Hinweises auf die Patenterteilung:
**29.11.95 Patentblatt 95/48**

(84) Benannte Vertragsstaaten:
**BE CH DE ES FR GB IT LI NL**

(56) Entgegenhaltungen:
**DE-B- 1 025 146**
**US-A- 2 981 692**
**US-A- 3 131 162**

(73) Patentinhaber: **BASF Aktiengesellschaft**
**Carl-Bosch-Strasse 38**
**D-67063 Ludwigshafen (DE)**

(72) Erfinder: **KRONER, Matthias**
**Brucknerstrasse 25**
**D-6719 Eisenberg (DE)**

Erfinder: **HARTMANN, Heinrich**
**Weinheimer Strasse 46**
**D-6703 Limburgerhof (DE)**
Erfinder: **WOLF, Gerhard**
**Robert-Blum-Strasse 31**
**D-6800 Mannheim 24 (DE)**
Erfinder: **BAUR, Richard**
**Nelkenstrasse 1**
**D-6704 Mutterstadt (DE)**
Erfinder: **DIESSEL, Paul**
**Asternstrasse 16**
**D-6704 Mutterstadt (DE)**
Erfinder: **JAEGER, Hans-Ulrich**
**Erschigweg 31**
**D-6730 Neustadt (DE)**
Erfinder: **SCHWENDEMANN, Volker**
**Am Haeuselberg 20**
**D-6730 Neustadt (DE)**
Erfinder: **PERNER, Johannes**
**Ginsterweg 4**
**D-6730 Neustadt (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 603 236 B1

**Beschreibung**

Die Erfindung betrifft Copolymerisate aus Hydroxyalkylvinylethern, Additionsprodukten von $C_2$- bis $C_4$-Alkylenoxiden an Hydroxyalkylvinylether und/oder Polytetrahydrofuranvinylether und gegebenenfalls anderen copolymerisierbaren Monomeren und Verwendung der genannten Copolymerisate sowie die Verwendung von kationisch polymerisierten Hydroxyalkylvinylethern, die die Monomeren (a) oder (b) als alleinige Monomere oder in Mischung mit anderen copolymerisierbaren Monomeren einpolymerisiert enthalten, als Viskositätserniedriger für Tenside und als Zusatz zu Wasch- und Reinigungsmitteln.

Aus der US-A-2 104 004 ist ein Verfahren zur kationischen Polymerisation von Vinylethern bekannt, bei dem man als Katalysator 0,001 bis 5 Gew.-% einer praktisch wasserfreien anorganischen Säure einsetzt. Geeignete Katalysatoren sind beispielsweise Aluminiumchlorid, Eisenchlorid, Schwefelsäure, Salzsäure und Bortrifluorid.

Aus der US-B-26 407 ist die radikalische Copolymerisation von Divinylverbindungen, wie Divinylether, Divinyldimethylsilan oder Divinylsulfon mit monoethylenisch ungesättigten Monomeren bekannt, z.B. Vinylacetat, Maleinsäureanhydrid oder Fumarsäuredimethylester. Geeignete Katalysatoren sind Peroxiverbindungen, wie Di-tert.-butylperoxid, Wasserstoffperoxid, Alkylhydroperoxide und Diacylperoxide. Außerdem eignen sich Ziegler-Katalysatoren zur Initiierung der Polymerisation. Die so erhältlichen Polymerisate sind faser- und filmbildend und können zur Herstellung von Beschichtungen oder Verpackungsmaterialien verwendet werden. Sie eignen sich außerdem als Schmiermittel und Schmiermitteladditive, Klebstoffe und als Vernetzungsmittel für Epoxyharze.

Aus der US-A-3 328 468 ist die Herstellung von Homopolymerisaten des Monovinylethers von Diethylenglykol unter Verwendung von Polymerisationsinitiatoren bekannt, die unter den Polymerisationsbedingungen Radikale bilden. Die Hydroxylgruppe der Monovinylether von Diethylenglykol bleibt bei der radikalischen Polymerisation praktisch unverändert. Die so erhältlichen Polymeren können Polyole bei der Schaumstoffherstellung ersetzen. Wie aus dieser Literaturstelle außerdem bekannt ist, können Monovinylether von Diolen unter Einwirkung kationischer Initiatoren unter Bildung von Polyacetalen polymerisiert werden.

Aus der EP-A-0 359 055 sind Waschmittelformulierungen bekannt, die 0,5 bis 65 Gew.-% eines oberflächenaktiven Mittels und 1 bis 80 Gew.-% eines Builders enthalten, der aus einem Polymer besteht, das durch radikalische Copolymerisation von Divinylether und Maleinsäureanhydrid im Molverhältnis 1:2 und anschließende Hydrolyse der Anhydridgruppen und Neutralisation erhältlich ist.

Aus der EP-A-0 379 166 sind u.a. auch Copolymerisate aus Alkylvinylethern und hydroxylgruppenhaltigen Vinylethern, wie Hydroxyethylvinylether, Hydroxypropylvinylether, Hydroxybutylvinylether und Alkoxylaten dieser hydroxylgruppenhaltigen Vinylether bekannt. Die Copolymerisate werden in Beschichtungs- und Formmassen zur Verbesserung des Verlaufs oder als Antischaummittel eingesetzt.

Aus der US-A-3 131 162 ist die Copolymerisation von Monovinylethern von Glykolen mit Vinylestern von gesättigten Fettsäuren mit einer Kohlenstoffkette mit bis zu 6 Kohlenstoffatomen in Gegenwart von Peroxiden bekannt. Die Copolymerisate können unter Zusatz üblicher Vulkanisierhilfsmittel zu gummiartigen Materialien vulkanisiert werden.

Der vorliegenden Erfindung liegt die Aufgabe zugrunde, neue Stoffe zur Verfügung zu stellen. Eine andere Aufgabe besteht darin, die Primär- und Sekundärwaschwirkung von Waschmitteln zu verbessern und die Viskosität von wäßrigen Tensidlösungen und Waschmittelslurries zu erniedrigen.

Die Aufgabe wird erfindungsgemäß gelöst mit Copolymerisaten von Hydroxyalkylvinylethern, die erhältlich sind durch kationisch oder radikalisch initiierte Copolymerisation von

(a) 99 bis 1 Gew.-% Hydroxyalkylvinylethern,

(b) 1 bis 99 Gew.-% Additionsprodukten von $C_2$- bis $C_4$-Alkylenoxiden an Hydroxyalkylvinylether und/oder Polytetrahydrofuranvinylether und

(c) 0 bis 98 Gew.-% anderen copolymerisierbaren Monomeren.

Eine der oben definierten Aufgaben wird außerdem gelöst mit der Verwendung von Copolymerisaten, die erhältlich sind durch kationisch oder radikalisch initiierte Copolymeriation von

(a) 99 bis 1 Gew.-% Hydroxyalkylvinylethern,

(b) 1 bis 99 Gew.-% Additionsprodukten von $C_2$- bis $C_4$-Alkylenoxiden oder Tetrahydrofuran an Hydroxyalkylvinylether und

(c) 0 bis 98 Gew.-% anderen copolymerisierbaren Monomeren,

sowie von kationisch oder radikalisch polymerisierten Hydroxyalkylvinylethern, die die Monomeren (a) oder (b) als alleinige Monomere oder in Mischung mit anderen copolymerisierbaren Monomeren einpolymerisiert enthalten, als Zusatz zu Waschmitteln in Mengen von 0,1 bis 50 Gew.-%.

Bevorzugt werden Copolymerisate, die erhältlich sind durch kationisch initiierte Copolymerisation von

(a) 99 bis 1 Gew.-% Hydroxybutylvinylether,

(b) 1 bis 99 Gew.-% Additionsprodukten von 1 bis 100 Mol Ethylenoxid an 1 Mol Hydroxylbutylvinylether und

(c) 0 bis 98 Gew.-% copolymerisierbaren Monomeren aus der Gruppe der Divinylether, der mindestens 2 OH-Gruppen aufweisen Verbindungen und deren Gemischen.

Als Monomere der Gruppe (a) kommen alle Hydroxyalkylvinylether in Betracht, die sich von mindestens 2 OH-Gruppen aufweisenden Verbindungen ableiten, bei denen das Wasserstoffatom einer OH-Gruppe durch die Vinylgruppe ersetzt ist. Diese Verbindungen können beispielsweise mit Hilfe der folgenden allgemeinen Formel charakterisiert werden:

$$CH_2 = CH—O—R—OH \qquad (I),$$

in der R einen mindestens zweiwertigen Rest bedeutet, der gegebenenfalls noch substituiert sein kann, z.B. R = $C_2$- bis $C_{20}$-Alkylen, Phenylen, mit OH-Gruppen oder mit Estergruppen substituierte $C_3$- bis $C_{20}$-Alkylen- oder Phenylengruppen bedeutet.

Einzelne Verbindungen dieser Art sind beispielsweise Hydroxyethylvinylether, 3-Hydroxypropylvinylether, 2-Hydroxypropylvinylether, 2-Hydroxy-2-methyl-propylvinylether, 2-Hydroxybutylvinylether, 3-Hydroxybutylvinylether, 4-Hydroxybutylvinylether, 2-Hydroxy-2-ethyl-ethylvinylether, 3-Hydroxy3-methyl-propylvinylether, 3-Hydroxy-2-methyl-propylvinylether, 3-Hydroxy-1-methyl-propylvinylether, Hydroxypentylvinylether, 6-Hydroxyhexylvinylether, 4-Hydroxy-1,4-dimethyl-butylvinylether, Brenzkatechin-, Resorcin- und Hydrochinonomonovinylether, 2-Hydroxycyclohexylvinylether, 3-Hydroxycyclohexylvinylether, 4-Hydroxycyclohexylvinylether, Hydroxyheptylvinylether, Hydroxyoctylvinylether, 4-(Hydroxymethyl)-cyclohexylmethylvinylether, Hydroxydecylvinylether sowie Monovinylether von Polyhydroxyverbindungen, wie beispielsweise Glycerinmonovinylether, Erythritmonovinylether, Sorbitmonovinylether, Weinsäurediethylestermonovinylether, 2,2-Bis-(hydroxymethyl)-propionsäureethylestermonovinylether sowie Monovinylether von Mono-, Di- und Trisacchariden, Oligosacchariden und Zuckersäureestern. Als Saccharide können beispielsweise verwendet werden: Glucose, Methylglucosid, Butylglucosid, Saccharose, Palatinose, Palatinit, Lactose, Maltose, Fructose, Leucrose, Panose, Dextrine, Isomaltose, Trehalurose, Raffinose, Panose. Als Zuckersäuren können beispielsweise verwendet werden: Galacturonsäure, Galactonsäure, Galactensäure, Galactarsäure, Gluconsäure. Vorzugsweise verwendet man aus dieser Gruppe von Vinylethern die isomeren Hydroxybutylvinylether, insbesondere 4-Hydroxybutyl-1-vinylether und 6-Hydroxyhexylvinylether sowie 4-(Hydroxymethyl)-cyclohexylmethylvinylether. Die Monomeren der Gruppe (a) sind zu 99 bis 1, vorzugsweise 90 bis 10 Gew.-% am Aufbau der Copolymerisate beteiligt.

Als Monomere der Gruppe (b) kommen die Additionsprodukte von $C_2$- bis $C_4$-Alkylenoxiden an die Hydroxyalkylvinylether in Betracht, die als Monomere der Komponente (a) oben definiert sind. Geeignete Alkylenoxide sind Ethylenoxid, Propylenoxid, Butylenoxid-1,2, Butylenoxid-2,3 und Isobutylenoxid. Die Alkylenoxide werden an die Hydroxyalkylvinylether angelagert, um die Monomeren der Komponenten (b) zu erhalten. Verbindungen dieser Art sind bekannt. Die Monomeren der Komponenten (b) können jedoch auch durch Vinylierung von Polyalkylenglykolen hergestellt werden. Einzelne Monomere der Komponente (b) sind beispielsweise die Additionsprodukte, die erhältlich sind durch Addition von 3 Mol Ethylenoxid an 1 Mol 3-Hydroxypropylvinylether, 4 Mol Butylenoxid an 1 Mol 2-Hydroxypropylvinylether, 10 Mol Ethylenoxid an 1 Mol 2-Hydroxy-2-methyl-propylvinylether, 3 Mol Ethylenoxid an 1 Mol 4-Hydroxybutylvinylether, 7 Mol Ethylenoxid an 1 Mol 4-Hydroxybutylvinylether, 11 Mol Ethylenoxid an 1 Mol 4-Hydroxybutylvinylether, 25 Mol Ethylenoxid an 1 Mol 4-Hydroxybutylvinylether, 50 Mol Ethylenoxid an 1 Mol 4-Hydroxybutylvinylether, 3 Mol Propylenoxid an 1 Mol 4-Hydroxybutylvinylether, 11 Mol Butylenoxid an 1 Mol 4-Hydroxybutylvinylether, 1 Mol Ethylenoxid an 1 Mol 4-Hydroxypentylvinylether, 100 Mol Propylenoxid an 1 Mol 6-Hydroxyhexylvinylether, 30 Mol Ethylenoxid an 1 Mol 4-Hydroxy-1,4-dimethylbutylvinylether und 50 Mol Ethylenoxid an 1 Mol Hydroxyheptylvinylether.

Weiterhin sind geeignete Monomere der Komponente (b) zum Beispiel Diethylenglykolmonovinylether, Triethylenglykolmonovinylether, Tetraethylenglykolmonovinylether, allgemein Polyethylenglykolmonovinylether mit Molgewichten bis 20.000 sowie Dipropylenglykolmonovinylether, Tripropylenglykolmonovinylether, Tetrapropylenglykolmonovinylether, Dibutylenglykolmonovinylether, Tributylenglykolmonovinylether sowie gemischte Glykole wie Ethylen-propylenglykolmonovinylether, Diethylenglykolpropylenglykolmonovinylether.

Außerdem kommen Blockcopolymerisate der Alkylenoxide in Betracht, die durch Anlagerung von zunächst Ethylenoxid und anschließend Propylenoxid an Hydroxylalkylvinylether der Formel I erhältlich sind. Ebenso sind als Monomere der Komponente (b) solche Additionsprodukte geeignet, die durch Anlagerung von Propylenoxid und anschließend Ethylenoxid und gegebenenfalls Butylenoxid an Verbindungen der Formel I erhältlich sind. Ebenso eignen sich Polytetrahydrofuranmonovinylether, die durch Vinylie-

3

rung von Polytetrahydrofuranen mit den Molekulargewichten von 250 bis 4.500 erhältlich sind.

Außerdem können Umsetzungsprodukte von Alkylenoxiden mit Monovinylethern von Polyhydroxyverbindungen eingesetzt werden, beispielsweise Umsetzungsprodukte von 1 Mol Glycerinmonovinylether mit 25 Mol Ethylenoxid, 1 Mol Erythritmonovinylether mit 7 Mol Propylenoxid, 1 Mol Sorbitmonovinylether mit 3 Mol Butylenoxid, 1 Mol Weinsäurediethylestermonovinylether mit 11 Mol Ethylenoxid, 1 Mol Bis-(hydroxymethyl)-propionsäureethylester mit 25 Mol Propylenoxid und 1 Mol Glykosemonovinylether mit 50 Mol Ethylenoxid. Vorzugsweise verwendet man als Monomere der Gruppe (b) solche Additionsprodukte von Alkyenoxiden an Hydroxyalkylvinylether, die wasserlöslich sind (z.B. wenn sich mindestens 1 g der alkoxylierten Verbindungen in 1 l Wasser löst). Die Alkylenoxide werden im allgemeinen in Mengen von 1 bis 100, vorzugsweise 2 bis 60 Mol an 1 Mol Hydroxyalkylvinylether angelagert. Zur Herstellung der erfindungsgemäßen Copolymerisate kann man jedoch auch noch größere Mengen an Alkylenoxiden an die Verbindungen der Formel I anlagern. Von den Monomeren (b) kommen vorzugsweise die Additionsprodukte von 1 bis 100 Mol Ethylenoxid an 1 Mol Hydroxybutylvinylether in Betracht. Die Monomeren (b) sind zu 1 bis 99, vorzugsweise 10 bis 90 Gew.-% am Aufbau der Copolymerisate beteiligt.

Als Monomere (c) kommen alle anderen Monomeren in Betracht, die mit den Monomeren (a) und (b) copolymerisierbar sind. Beispiele hierfür sind monoethylenisch ungesättigte $C_3$- bis $C_8$-Carbonsäuren, wie Acrylsäure, Methacrylsäure, Ethacrylsäure, Maleinsäure, Fumarsäure, Aconitsäure und Itaconsäure. Außerdem eignen sich die Ester der genannten Carbonsäuren mit einwertigen $C_1$- bis $C_{18}$-Alkoholen oder mehrwertigen $C_2$- bis $C_8$-Alkoholen, beispielsweise seien folgende Ester genannt: Acrylsäuremethylester, Acrylsäureethylester, Acrylsäure-tert.-butylester, Acrylsäure-n-butylester, Acrylsäureethylhexylester, Methacrylsäuremethylester, Methacrylsäureethylester, Methacrylsäure-n-propylester, Methacrylsäureisopropylester, Methacrylsäure-n-butylester, Methacrylsäureisobutylester, Acrylsäureisopropylester, Maleinsäuremonomethylester, Maleinsäuredimethylester, Maleinsäuremonoethylester, Maleinsäurediethylester, Maleinsäuremonoisopropylester, Maleinsäuredi-n-propylester, Maleinsäuremono-n-butylester, Maleinsäuredi-n-butylester, Maleinsäuremonoisodecylester und Maleinsäuremonoisononylester. Soweit die obengenannten Carbonsäuren Anhydride bilden, sind auch die Anhydride als Comonomere bei der Copolymerisation einsetzbar, z.B. Maleinsäureanhydrid, Acrylsäureanhydrid, Methacrylsäureanhydrid und Itaconsäureanhydrid. Außerdem eignen sich die Amide der Carbonsäuren wie Acrylamid und Methacrylamid und Nitrile der genannten Carbonsäuren wie Acrylnitril und Methacrylnitril.

Weitere Comonomere der Gruppe (c) sind Vinylester, die sich vorzugsweise von $C_1$- bis $C_{18}$-gesättigten Carbonsäuren ableiten, z.B. Vinylformiat, Vinylacetat, Vinylpropionat, Vinylbutyrat, Vinylpivalat und Vinylstearat. Eine weitere Klasse von Verbindungen der Klasse (c) sind Alkylvinylether, vorzugsweise solche, die sich von $C_1$- bis $C_{18}$-Alkoholen ableiten, wie Methylvinylether, Ethylvinylether, Propylvinylether, n-Butylvinylether, tert.-Butylvinylether, sec.-Butylvinylether, iso-Butylvinylether, Dodecylvinylether, Octadecylvinylether und Styrol.

Zur Erhöhung des Molekulargewichts der Copolymerisate kann man als Monomere der Gruppe (c) auch die üblicherweise bei der radikalischen Copolymerisation eingesetzten Vernetzer in Betracht.

Die Vernetzer enthalten mindestens zwei nicht konjugierte, ethylenisch ungesättigte Doppelbindungen. Geeignete Vernetzer sind beispielsweise N,N'-Methylenbisacrylamid, Polyethylenglykoldiacrylate und Polyethylenglykoldimethacrylate, die sich jeweils von Polyethylenglykolen eines Molekulargewichts von 126 bis 8500 ableiten, Trimethylolpropantriacrylat, Trimethylolpropantrimethacrylat, Ethylenglykoldiacrylat, Propylenglykoldiacrylat, Butandioldiacrylat, Hexandioldiacrylat, Hexandioldimethacrylat, Diacrylate und Dimethacrylate von Blockcopolymerisaten aus Ethylenoxid und Propylenoxid, zweifach bzw. dreifach mit Acrylsäure oder Methacrylsäure veresterte Anlagerungsprodukte von Ethylenoxid und/oder Propylenoxid an Trimethylolpropan, mindestens zweifach mit Acrylsäure oder Methacrylsäure veresterte mehrwertige Alkohole, wie Glycerin oder Pentaerythrit, Triallylamin, Tetraallylethylendiamin, Divinylbenzol, Diallylphthalat, Polyethylenglykoldivinylether, Trimethylolpropandiallylether, Polyethylenglykoldivinylether, Butandioldivinylether, Pentaerythrittriallylether und/oder Divinylethylenharnstoff und/oder Triallylmonoalkylammoniumsalze, wie z.B. Triallylmethylammoniumchlorid. Vorzugsweise setzt man wasserlösliche Vernetzer ein, z.B. N,N'-Methylenbisacrylamid, Polyethylenglykoldiacrylate, Polyethylenglykoldimethacrylate, Pentaerythrittriallylether und/oder Divinylharnstoff.

Bevorzugt eingesetzte Vernetzer sind Divinylether von $C_2$- bis $C_{20}$-Diolen, Polyalkylenglykolen und Diphenolen, wie z.B. 1,2-Ethylenglykoldivinylether, 1,4-Butandioldivinylether, 1,4-Bis-(hydroxymethyl)-cyclohexyldivinylether und 1,6-Hexandioldivinylether,Diethylenglykoldivinylether und Hydrochinondivinylether. Falls bei der radikalischen Polymerisation Vernetzer eingesetzt werden, so betragen die angewendeten Mengen 0,1 bis 15, vorzugsweise 0,2 bis 5 Gew.-%. Es können auch Polytetrahydrofurandivinylether mit Molgewichten von 250 bis 4500 eingesetzt werden.

4

Bei der kationischen Polymerisation setzt man bevorzugt als copolymerisierbare Monomere (c) mindestens zwei Vinylethergruppen enthaltende Monomere ein. Bevorzugt sind Divinylether, wobei sämtliche Divinylether einsetzbar sind, z.B. die oben bereits erwähnten Divinylether von $C_2$- bis $C_{20}$-Alkylendiolen bzw. Divinylether von Polyalkylenglykolen eines Molekulargewichts bis zu 35.000 des Polyalkylenglykolsegments. Bei der kationischen Copolymerisation werden bevorzugt Butandioldivinylether, insbesondere 1,4-Butandioldivinylether, 1,6-Hexandioldivinylether und 1,4-Bis-(hydroxymethyl)-cyclohexyldivinylether eingesetzt. Die Mengen betragen hierbei bis zu 20 Gew.-%, bezogen auf die Monomeren (a) und (b).

Für die kationische Copolymerisation kommen außerdem zur Erhöhung des Molekulargewichts der Copolymerisate Diole oder Polyole in Betracht. Vorzugsweise verwendet man $C_2$- bis $C_{20}$-Diole, z.B. Ethylenglykol, Propylenglykol, 1,4-Butandiol, 1,2-Butandiol, 1,3-Butandiol, 1,6-Hexandiol- und Polyalkylenglykole mit Molekulargewichten bis 35.000, beispielsweise Diethylenglykol, Triethylenglykol, Tetraethylenglykol, Pentaethylenglykol, Hexaethylenglykol, Dipropylenglykol, Copolymerisate aus Ethylenoxid und Propylenoxid sowie Copolymerisate aus Ethylenoxid und Butylenoxid oder Copolymerisate aus Ethylenoxid und Tetrahydrofuran. Die Copolymerisate können die Monomeren in statistischer Verteilung oder in Form von Blöcken enthalten. Diese Monomere sind bei der Copolymerisation, falls sie eingesetzt werden, in Mengen von 0,1 bis 20 Gew.-% anwesend. Polyalkylenoxide können bei der Alkoxylierung von Hydroxyalkylvinylethern (Monomere a) entstehen. Bei der kationischen Copolymerisation können die mindestens zwei Vinylethergruppen enthaltenden Monomeren und die mindestens zwei OH-Gruppen aufweisenden Verbindungen, z.B. Alkylenglykole, gemeinsam eingesetzt werden, um Polymerisate mit hohen Molekulargewichten zu erhalten.

Hierfür ist es dann allerdings erforderlich, daß Vinylgruppen und OH-Gruppen in der Monomermischung in etwa äquimolarem Verhältnis vorliegen.

Die Monomeren (a), (b) und gegebenenfalls (c) können sowohl radikalisch als auch kationisch copolymerisiert werden. Bei der radikalisch initiierten Copolymerisation tritt über die Doppelbindungen der Monomeren eine C-C-Verknüpfung unter Bildung von Polymeren ein.

Als Initiatoren kann man sämtliche dafür bekannten Radikalspender einsetzen. Diese Initiatoren können in Wasser löslich oder auch unlöslich sein. In Wasser lösliche Initiatoren sind beispielsweise anorganische Peroxide, wie Kalium-, Natrium- und Ammoniumperoxodisulfat sowie Wasserstoffperoxid. Außerdem eignen sich als Initiatoren organische Peroxide, Hydroperoxide, Persäuren, Ketonperoxide, Perketale und Perester, z.B. Methylethylketonhydroperoxid, Cumolhydroperoxid, tert.-Butylhydroperoxid, 1,1-(di-tert.-Butylperoxy)-cyclohexan, Di-(tert.-Butyl)peroxid, tert.-Butyl-oxyperpivalat, Ethylhexylperoctoat, tert.-Butylmonoperoxy-maleat, Dicyclohexylperoxydicarbonat, Dibenzoylperoxid, Diacetylperoxid, Didecanoylperoxid sowie Mischungen von Peroxiden. Außerdem eignen sich Redoxsysteme, die außer einer Peroxyverbindung noch eine reduzierendwirkende Komponente enthalten. Geeignete reduzierende Komponenten sind beispielsweise Cer-III und Eisen-II-Salze, Natriumsulfit, Natriumhydrogensulfit, Natriumdithionit, Ascorbinsäure und Natriumformaldehydsulfoxylat. Die Auswahl geeigneter Initiatoren erfolgt vorzugsweise in der Weise, daß man solche Radikale bildenden Verbindungen einsetzt, die bei der jeweils gewählten Polymerisationstemperatur eine Halbwertszeit von weniger als 3 Stunden aufweisen. Falls man die Polymerisation zunächst bei niedrigerer Temperatur startet und bei höherer Temperatur zu Ende führt, so ist es zweckmäßig, mit mindestens zwei bei verschiedenen Temperaturen zerfallenden Initiatoren zu arbeiten, nämlich zunächst einen bereits bei niedrigerer Temperatur zerfallenden Initiator für den Start der Polymerisation und dann die Hauptpolymerisation mit einem Initiator zu Ende zu führen, der bei höherer Temperatur zerfällt. Durch Zusatz von Schwermetallsalzen, z.B. Kupfer-, Kobalt-, Mangan-, Eisen-, Nickel- und Chromsalzen zu peroxydischen Katalysatoren kann die Zerfallstemperatur der peroxydischen Katalysatoren erniedrigt werden.

Geeignete Initiatoren sind außerdem Azoverbindungen, wie 2,2'-Azobisisobutyronitril, 2,2'-Azobis(2-amidinopropan)dihydrochlorid, 2,2'-Azobis(2-methylpropionamidin)dihydrochlorid, 2,2'-Azobis(2,4-dimethylvaleronitril) und Dimethyl-2,2'-azobisisobutyrat. Besonders bevorzugt werden Wasserstoffperoxid, Kalium-, Natrium- und Ammoniumperoxodisulfat, tert.-Butylperpivalat, 2,2'-Azobis-(2,4-dimethylvaleronitril) und Di-tert.-Butylperoxid als Initiator bei der Polymerisation eingesetzt. Bezogen auf die zu polymerisierenden Monomeren verwendet man üblicherweise 0,5 bis 10, vorzugsweise 1 bis 8 Gew.-% eines Radikale bildenden Initiators oder eines Gemisches von solchen Polymerisationsinitiatoren. Die Einsatzmenge des Initiators hat bekanntlich einen erheblichen Einfluß auf das Molekulargewicht der entstehenden Homo- und Copolymerisate.

Die radikalische Polymerisation erfolgt vorzugsweise in Gegenwart eines Verdünnungsmittels. Hierbei kann es sich um Lösemittel für die Monomeren und die Polymerisate bzw. lediglich um Lösemittel für die Monomeren handeln. Geeignete Lösemittel sind beispielsweise Ether, wie Diethylether, Dibutylether, Diisobutylether, Methyl-tert.-butylether, cyclische Ether, wie Tetrahydrofuran und Dioxan, Mono- oder Dialkylether von Mono- oder Polyethylenglykolen, z.B. Ethylenglykoldimethylether, Ethylenglykoldibutylether, Diethylglykoldimethylether, Diethylenglykoldibutylether, Monoalkylether von Mono- oder Polyethylenglykolacetaten, wie Methylglykolacetat, Butylglykolacetat, Methyldiethylenglykolacetat, Butyldiethylenglykolacetat, sowie Anlagerungsprodukte von Alkylenoxiden mit 2 bis 4 C-Atomen an $C_1$- bis $C_{28}$-Alkohole oder Alkylphenole. Die Molekulargewichte dieser Anlagerungsprodukte können bis zu 8000, vorzugsweise bis zu 6000 betragen. Sofern zur Herstellung der Anlagerungsprodukte mindestens 2 verschiedene Alkylenoxide eingesetzt werden, so können die Alkylenoxideinheiten in den Reationsprodukten statistisch verteilt sein oder in Form von Blöcken vorliegen. Solche Reaktionsprodukte sind Bestandteile von Flüssigwaschmitteln. Da die Polymerisate in Waschmitteln eingesetzt werden, stellt man sie vorteilhafterweise in den beschriebenen Anlagerungsprodukten als Lösemittel her und kann die anfallende Polymerlösung unmittelbar zur Herstellung der Waschmittelformulierung einsetzen. Prinzipiell können bei der radikalischen Copolymerisation sämtliche nichtionischen Tenside, die in Waschmitteln eingesetzt werden, als Verdünnungsmittel verwendet werden.

Bevorzugte Lösemittel für die Polymerisation sind z.B. Umsetzungsprodukte von einwertigen $C_1$-bis $C_{28}$-aliphatischen Alkoholen oder $C_1$- bis $C_{18}$-Alkylphenolen mit Ethylenoxid, Propylenoxid und/oder Butylenoxid, z.B. die Anlagerungsprodukte von 3 bis 11 Mol Ethylenoxid an ein Mol eines $C_{13}/C_{15}$-Alkohols, Anlagerungsprodukte von 5 bis 15 Mol Ethylenoxid an 1 Mol Nonylphenol, Anlagerungsprodukte von 7 bis 11 Mol Ethylenoxid und 3 bis 5 Mol Propylenoxid an 1 Mol Oleylalkohol und Anlagerungsprodukte von 5 bis 15 Mol Ethylenoxid an 1 Mol Stearylalkohol oder Talgfettalkohol. Außerdem eignen sich die Anlagerungsprodukte von Ethylenoxid, Propylenoxid und Butylenoxid an mehrwertige Alkohole, z.B. Glykol, Diethylenglykol, Triethylenglykol, Tetraethylenglykol, Propylenglykol, Dipropylenglykol, Blockcopolymerisate aus Ethylenoxid und Propylenoxid, Glycerin und Oligoglycerine. Besonders bevorzugt aus dieser Gruppe von Verbindungen sind Diethylenglykol und Polyethylenglykole mit Kondensationsgraden bis 25.

Weitere geeignete Lösemittel sind $C_1$- bis $C_6$-Alkohole, wie Methanol, Ethanol, Isopropanol, n-Propanol, Butanole, n-Hexanol und Cyclohexanol, Ketone, z.B. Aceton, Ethylmethylketon und Cyclohexanon, Ester, z.B. Essigsäureethylester, sowie Wasser und Mischungen von Wasser mit wasserlöslichen organischen Lösemitteln. Sofern ein inertes Lösemittel bei der Polymerisation verwendet wird, betragen die Konzentrationen der Monomeren darin 10 bis 90, vorzugsweise, 15 bis 70 Gew.-%.

Die Polymerisation der Monomeren der Gruppen a) bis c) kann gegebenenfalls zusätzlich in Gegenwart von Reglern durchgeführt werden. Geeignete Regler sind beispielsweise Mercaptoverbindungen, wie Mercaptoethanol, Mercaptopropanol, Mercaptobutanol, Mercaptoessigsäure, Mercaptopropionsäure, Butylmercaptan und Dodecylmercaptan. Als Regler eignen sich außerdem Allylverbindungen, wie Allylalkohol, Aldehyde, wie Formaldehyd, Acetaldehyd, Propionaldehyd, n-Butyraldehyd und Isobutyraldehyd, Ameisensäure, Ammoniumformiat, Propionsäure, Hydroxylammoniumsulfat und Butenole. Regler werden insbesondere dann eingesetzt, wenn man größere Mengen an vernetzend wirkenden Monomeren der Gruppe c) bei der Polymerisation anwendet. Aufgrund des Einsatzes der Regler erhält man in solchen Fällen wasserlösliche Polymerisate bzw.Polymerisate, die sich leicht in Wasser dispergieren lassen.

Die Copolymerisation kann auch ohne Verdünnungsmittel durchgeführt werden. Diese Verfahrensvariante eignet sich ganz besonders dann, wenn man als Monomer der Komponente (b) höher ethoxylierte Hydroxyalkylvinylether einsetzt, z.B. bei Umsetzungsprodukten von 4-Hydroxybutylvinylether mit 3, 7, 11, 25 oder 50 Mol Ethylenoxid pro Mol 4-Hydroxybutylvinylether und als Monomer der Komponente (c) Maleinsäuredimethylester oder Maleinsäurediethylester.

Der Fortschritt der Copolymerisation kann aufgrund der Abnahme des Vinylethergehalts im Reaktionsgemisch mit Hilfe einer Jodtitration leicht verfolgt werden. Nach der Polymerisation können restliche Vinyletherendgruppen durch Behandlung der Polymerisate in wäßrig saurem Medium gespalten werden. Der dabei entstehende Acetaldehyd kann leicht mit Hilfe einer Wasserdampfdestillation aus der wäßrigen Polymerlösung entfernt werden. Auf diese Weise gelingt es, praktisch restmonomerfreie Copolymerisate herzustellen.

Die Copolymerisate können im Anschluß an die Polymerisation noch modifiziert werden. So ist es beispielsweise möglich, Copolymerisate, die die Monomeren (a), (b) und als Monomer (c) einen Ester einer ethylenisch ungesättigten Carbonsäure einpolymerisiert enthalten, durch Behandlung mit wäßrigen Basen, z.B. Natronlauge unter Esterhydrolyse zu einem Carboxylatgruppen enthaltenden Copolymerisat abzuwandeln. Eine andere Möglichkeit besteht darin, Hydroxylamin, Ammoniak oder Amine auf Estergruppen einpolymerisiert enthaltende erfindungsgemäße Copolymerisate einwirken zu lassen, so daß man Hydroxamsäuren oder Carbonsäureamide erhält. Hier ist eine Vielzahl von Folgereaktion zur Modifizierung der erfindungsgemäßen Copolymerisate möglich.

Die Monomeren (a), (b) und gegebenenfalls (c) können auch kationisch polymerisiert werden. Hierbei addiert die OH-Gruppe eines Monomeren an die Vinylethergruppe des Nachbarmoleküls unter Bildung eines Acetaldehydacetals. Bei dieser Polymerisation erhält man eine polymere Hauptkette, in der die Monomereinheiten über Acetaldehydacetale miteinander verknüpft sind. Die kationische Copolymerisation der Monomeren der Gruppen (a) und (b) kann mit Hilfe von allen organischen oder anorganischen sauer reagierenden Stoffen initiiert werden. Geeignete kationische Initiatoren sind beispielsweise Oxalsäure, Weinsäure, Adipinsäure, Bernsteinsäure, Bernsteinsäureanhydrid, Zitronensäure, Ameisensäure, Essigsäure, Propionsäure, Äpfelsäure, ein- oder mehrfach halogenierte Carbonsäuren, wie Trifluoressigsäure oder Trichloressigsäure, Chlorwasserstoff, Bromwasserstoff, Jodwasserstoff, Schwefelsäure, Phosphorsäure, Benzolsulfonsäure, p-Toluolsulfonsäure, Borsäure, Ascorbinsäure, saures Aluminiumoxid, Aluminiumsulfat, Kaliumaluminiumsulfat, Eisen-II-sulfat Eisen-III-sulfat, Aluminiumoxid, Titanylsulfat, Eisen-III-chlorid, Bortrifluorid, Bortrichlorid, Bortribromid, Jod, Ionenaustauscher in der Säureform und mit Säure beladene inerte feste Stoffe. Die Initiatoren für die kationische Polymerisation werden üblicherweise in Mengen von 0,001 bis 20, vorzugsweise 0,01 bis 1 Gew.-%, bezogen auf die Monomeren der Gruppen (a) und (b), eingesetzt. Die Copolymerisation verläuft stark exotherm. Die Reaktionstemperaturen betragen je nach Aktivität des eingesetzten Initiators zwischen -20 und 250, vorzugsweise 0 bis 200°C.

Beispielsweise reagieren die Monomeren (a) und (b) bei Anwesenheit von 0,1 bis 5 Gew.-% p-Toluolsulfonsäure bereits bei 40°C in einer exothermen Reaktion innerhalb von 10 min. vollständig ab. Verwendet man zur Initiierung der Copolymerisation 0,2 Gew.-% Oxalsäure, so ist die Copolymerisation bei 90°C innerhalb 1 Stunde und bei 130°C bereits innerhalb von 10 Minuten beendet. Es ist aber auch möglich, die mittels Oxalsäure initiierte Copolymerisation bei 200°C innerhalb weniger Sekunden ablaufen zu lassen. Allgemein wählt man bei der Initiierung mittels schwächerer Säuren (Weinsäure, Oxalsäure oder Zitronensäure) Temperaturen oberhalb von 70°C, während man bei Verwendung von starken Säuren, wie Toluolsulfonsäure, die Reaktionstemperaturen unter 70°C hält. Bei der Copolymerisation entstehen meistens farblose und bei Verwendung von Oxalsäure und Weinsäure als Katalysator thermische sehr beständige Öle oder Harze. Die Temperaturbeständigkeit der so hergestellten Copolymerisate reicht bis zu 250°C.

Die kationische Polymerisation der Monomeren (a) und (b) wird bevorzugt in Abwesenheit eines Lösemittels durchgeführt. Es ist aber auch möglich, in Gegenwart von inerten Verdünnungsmittel zu arbeiten. Dies kann in bestimmten Fällen von Vorteil sein, weil die Reaktionswärme dann mit Hilfe des verdampfenden Verdünnungsmittels leicht abgeführt werden kann. Bei Verwendung einer starken Säure als Initiator benutzt man bevorzugt eine Lösung des Initiators in einem Verdünnungsmittel, beispielsweise eine 0,005 bis 10 gew.-%ige, besonders bevorzugt eine 0,01 bis 5 gew.-%ige Lösung von p-Toluolsulfonsäure in Toluol.

Als Verdünnungsmittel bei der kationischen Copolymerisation kommen alle Verdünnungsmittel in Betracht, die keine funktionellen Gruppen tragen, die mit Vinylethern reagieren können. Vorzugsweise werden solche Verdünnungsmittel verwendet, die leicht in wasserfreier Form erhältlich und nicht hygroskopisch sind. Beispiele für geeignete Verdünnungsmittel sind Essigsäureethylester, Diethylenglykoldiethylether, Ethoxyethylacetat, Butoxyethylacetat, aliphatische Kohlenwasserstoffe, wie Pentan, Hexan, Cyclohexan, n-Heptan, n-Octan und Isooctan sowie aromatische Kohlenwasserstoffe, wie Toluol, Xylol, Mesitylen, Tetralin und Anisol. Geeignete Lösungsmittel sind ferner Tetrahydrofuran, Dioxan und Decalin, Aceton, Ethylenmethylketon und Cyclohexanon.

Die Copolymerisation kann beispielsweise als Eintopfreaktion durchgeführt werden. Hierzu kann man die Monomeren der Gruppen (a) und (b) und gegebenenfalls (c) in einem Reaktionsgefäß unter Ausschluß von Luftfeuchtigkeit mischen, mit Initiator versetzen und auf die erforderliche Reaktionstemperatur erwärmen. In einer bevorzugten Ausführungsform legt man die gesamte Initiatormenge im Reaktionsgefäß zusammen mit 10 % der zu polymerisierenden Monomermischung der Komponenten (a), (b) und gegebenenfalls (c) bei 20°C vor und startet die Polymerisationsreaktion vorzugsweise unter Inertgasatmosphäre durch Erhitzen der im Reaktionsgefäß vorgelegten Komponenten. Hierbei wird die Mischung gerührt und auch während der folgenden Copolymerisation. Sobald die Polymerisation in Gang gekommen ist, gibt man die restliche Monomermischung der Verbindungen der Komponenten (a), (b) und (c) kontinuierlich oder absatzweise zur Vorlage in dem Maße zu, daß die Polymerisationswärme sicher abgeführt werden kann. Wenn man Oxalsäure, Weinsäure oder Zitronensäure als Initiator einsetzt, benötigt man zum Start der Copolymerisation der Monomeren (a), (b) und gegebenenfalls (c) Temperaturen von etwa 70 bis etwa 160°C. Die Säuren lösen sich dann in der Monomermischung zu einer homogenen Lösung und die Polymerisation beginnt.

Bei Initiatoren, die sich in der Monomermischung nicht lösen, wird die heterogene Reaktionsmischung auf eine Temperatur in dem Bereich von 100 bis 250°C erwärmt, bis die Polymerisation startet.

Nach der Copolymerisation wird der Initiator entweder abgetrennt oder desaktiviert. Eine Desaktivierung des Katalysators empfiehlt sich deshalb, weil die Copolymerisate in Gegenwart von sauer reagierenden Stoffen und Wasser oder von anderen protischen Lösemitteln einer Hydrolyse unter Molgewichtsabbau unterliegen. Zur Desaktivierung des Initiators versetzt man das Reaktionsgemisch nach Abschluß der Copolymerisation und gegebenenfalls nach einem Abkühlen der Reaktionsmischung mit Alkalien, bevorzugt Natriumhydrogencarbonat, Natronlauge, Kalilauge, Natriumcarbonat, Kaliumcarbonat, Ammoniumcarbonat, Aminen, wie Ammoniak, Methylamin, Dimethylamin, Trimethylamin, Ethylamin, Diethylamin, Dibutylamin, Tributylamin, Ethanolamin, Diethanolamin, Triethanolamin, Morpholin oder Salzen aus starken Basen und schwachen Säuren, wie Natriumacetat, Natriumformiat oder Kaliumhydrogencarbonat. Zur Desaktivierung der sauren Initiatoren eignet sich außerdem Calciumoxid, Calciumhydroxid, basisches Aluminiumoxid sowie basische Ionenaustauscher. Unlösliche Initiatoren können leicht durch Abfiltrieren entfernt werden.

Das Copolymerisat kann nach Desaktivierung oder Abtrennung des Initators durch Zugabe von Wasser in eine Polymerlösung oder eine Dispersion überführt werden. Die Copolymerisatlösungen können gereinigt werden, indem man sie einer Wasserdampfdestillation unterwirft und dabei flüchtige Anteile abdestilliert. Während der Wasserdampfdestillation sollte der pH-Wert des wäßrigen Mediums oberhalb von 7 liegen. Copolymerisate, die einer Wasserdampfdestillation unterworfen wurden, verfärben sich nicht, wenn man sie einer alkalischen Nachbehandlung unterwirft.

Die Copolymerisate können 99 bis 1, vorzugsweise 90 bis 10 Gew.-% mindestens eines Monomeren der Gruppe (a) und 1 bis 99, vorzugsweise 10 bis 90 Gew.-% mindestens eines Monomer der Gruppe (b) einpolymerisiert enthalten. Die Monomeren werden vorzugsweise derart ausgewählt, daß in Wasser lösliche oder dispergierbare Copolymerisate entstehen. Durch Variation der Mischungsverhältnisse von Monomeren der Gruppe (b) und Monomeren der Gruppe (a) kann die Löslichkeit der erhaltenen Copolymerisate in Wasser beeinflußt werden. Die Copolymerisate haben in Abhängigkeit des Verhältnisses der einpolymerisierten Monomeren der Gruppen (a) und (b) in Form von 1 %igen wäßrigen Lösungen bei einem pH-Wert von 7,5 Trübungspunkte von 0 bis 100, vorzugsweise 5 bis 85 °C. Durch eine Erhöhung des Molekulargewichts kann der Trübungspunkt der Copolymerisate bei konstantem Verhältnis der Monomeren der Gruppe (a) und (b) herabgesetzt werden. Das Molekulargewicht der Copolymerisate kann mit Hilfe der Initiatormenge beeinflußt werden. Eine steigende Initiatormenge führt zu Copolymerisaten mit niedrigerem Molekulargewicht. Außerdem läßt sich das Molekulargewicht der Copolymerisate durch Mitverwendung von copolymerisierbaren Monomeren der Gruppe (c) beeinflussen. Wie oben bereits ausgeführt, sind Divinylether und mindestens zwei OH-Gruppen enthaltende Verbindungen geeignete Comonomere (c), die bei der kationischen Copolymerisation von (a) und (b) das Molekulargewicht der Copolymerisate erhöhen.

Falls bei der Herstellung der Monomeren (b) durch Alkoxylierung der Monomeren der Gruppe (a) als Verunreinigung Polyalkylenglykole enthalten sind, die nicht ohne weiteres abgetrennt werden können, so können diese Mischungen aus alkoxylierten Hydroxyalkylvinylethern und Polyalkylenglykolen bei der Copolymerisation eingesetzt werden. Polyalkylenglykole wirken als Diole bei der Polymerisation von Monomeren der Gruppen (a) und (b) molekulargewichtsbegrenzend. In diesem Fall setzt man vorzugsweise eine der OH-Gruppen äquimolare Menge an Vinylethergruppen in Form von Divinylethern zu, so daß man Copolymerisate mit höheren Molekulargewichten erhält. Falls die Divinylether im überstöchiometrischem Verhältnis zu den Polyalkylenglykolen eingesetzt werden, so wirken sie molekulargewichtsbegrenzend. Die Divinylether werden, sofern sie bei der Copolymerisation mitverwendet werden, in Mengen bis zu 10 Gew.-% eingesetzt.

Die Copolymerisate aus kationisch polymerisierten Monomeren (a), (b) und gegebenenfalls (c) sind in wäßrigen Lösungen bei pH-Werten unterhalb von 7 nicht beständig. Unter diesen Bedingungen tritt eine hydrolytische Spaltung der Copolymeren ein. So werden beispielsweise Copolymerisate, die durch kationische Polymerisation der Monomeren (a) und (b) hergestellt werden, in wäßriger Lösung bei einem pH-Wert von 6,2 innerhalb von 10 bis 20 Tagen, bei einem pH-wert von 5,3 innerhalb 1 bis 10 Tagen, bei einem pH-Wert von 4,7 innerhalb von 1 bis 30 Stunden und bei einem pH-Wert von 2,5 innerhalb von 1 bis 90 Minuten hydrolysiert. Auf die Empfindlichkeit der Copolymerisate gegenüber Säuren ist daher bei der Verarbeitung und Lagerung zu achten. Die Copolymerisate werden als Zusatz zu Waschmitteln verwendet.

Außer den erfindungsgemäßen Copolymerisaten können auch die kationisch polymerisierten Homopolymerisate der Monomeren (a) und (b) als Waschmittelzusatz verwendet werden. Solche Homopolymerisate gehören zum Stand der Technik. Außerdem können die bekannten Copolymerisate von Hydroxyalkylvinylether und anderen damit copolymerisierbaren Monomeren als Waschmittelzusatz verwendet werden. Diese Copolymerisate enthalten mindestens 1 Gew.-% mindestens eines Hydroxyalkylvinylethers der Komponente (a) und mindestens ein Monomer der obengenannten Komponente (c). Außerdem kommen als Zusatz zu Waschmitteln Copolymerisate aus den Monomeren (b) und den Monomeren (c) in Betracht. Die Monomeren der Komponenten (b) sind in diesen Copolymerisaten zu mindestens 1 Gew.-% in einpolymerisierter Form enthalten. Die Copolymerisate, die als charakteristische Monomere entweder (a) oder (b) enthalten, sind durch kationische oder durch radikalische Copolymerisation herstellbar. Einige Polymere dieser Art sind aus dem oben zitierten Stand der Technik für andere Anwendungen bekannt. Von besonderem Interesse sind Copolymerisate aus

4-Hydroxybutylvinylether und Vinylacetat,

4-Hydroxybutylvinylether und Acrylsäure oder Methacrylsäure,

4-Hydroxyalkylvinylether und Maleinsäurediethyl- oder dimethylester,

4-Hydroxyalkylvinylether und Maleinsäureanhydrid.

Bevorzugt zur Anwendung gelangende Copolymerisate, die Monomere der Gruppe (b) als charakteristischen Baustein enthalten, sind beispielsweise Copolymerisate aus

(1) dem Umsetzungsprodukt von 1 Mol 4-Hydroxybutylvinylether mit 3 Mol, 7 Mol, 11 Mol, 25 Mol und 50 Mol Ethylenoxid und

(2) Maleinsäurediethylester, Maleinsäuredimethylester, Acrylsäure, Methacrylsäure, Maleinsäureanhydrid, Methyl-(meth)acrylat, Butyl-(meth)acrylat, t-Butylacrylat oder Ethylacrylat sowie

Terpolymerisate aus

(1) dem Umsetzungsprodukt von 4-Hydroxybutylvinylester mit 3 bis 25 Mol Ethylenoxid,

(2) Acrylsäure, Methacrylsäure, Maleinsäureanhydrid oder Maleinsäurediethylester und

(3) Vinylacetat.

Die erfindungsgemäßen Copolymerisate sowie die kationisch polymerisierten Hydroxyalkylvinylether, die die Monomeren (a) oder (b) als alleinige Monomere oder in Mischung mit anderen copolymerisierbaren Monomeren einpolymerisiert enthalten, haben K-Werte von 9 bis 100, vorzugsweise 10 bis 70 (bestimmt nach H. Fikentscher in 1 %iger Lösung in Tetrahydrofuran bei 25 °C).

Die oben beschriebenen Homo- und Copolymerisate können als Viskositätserniedriger für Tenside verwendet werden. Beim Verdünnen von konzentrierten, wasserarmen oder wasserfreien Tensidformulierungen mit Wasser, wie dies im Bereich der gewerblichen Wäschereien oder bei der Herstellung von Waschmittelformulierungen üblich ist, tritt häufig ein Konzentrationsbereich mit einer sehr hohen Viskosität auf. Diese Erscheinung ist beim Transport der Formulierungen in Rohrleitungen, der Dosierung mit Hilfe von Pumpen und der Auflösegeschwindigkeit in der Waschflotte öft störend. Bei einer hohen Viskosität muß ein hoher Aufwand an mechanischer Energie zur Verarbeitung der Tenside aufgewandt werden. Außerdem ist der weitere Auflösevorgang der Tenside aufgrund der hohen Viskosität eines teilweise verdünnten Tensids mit erhöhtem Zeitaufwand verbunden. Die Zunahme der Viskosität von Tensiden beim Verdünnen mit Wasser tritt vor allem bei nichtionischen Tensiden auf, insbesondere bei polyalkoxylierten Verbindungen. Sofern man den Tensiden die oben beschriebenen Copolymerisate in Mengen von 0,1 bis 50, vorzugsweise 0,5 bis 10 Gew.-% zusetzt, kann die Viskosität solcher Mischungen beim verdünnen deutlich vermindert werden. Die erfindungsgemäß zu verwendenden Homo- und Copolymerisate werden dabei vorzugsweise zuerst im konzentrierten Tensid gelöst oder dispergiert. Danach wird die Mischung durch Zugabe von Wasser verdünnt. Das mit den erfindungsgemäß zu verwendenden Polymeren versetzte Tensidkonzentrat kann auch in eine wäßrige Waschflotte eingetragen werden. Es ist aber auch möglich, eine bereits mit Wasser versetzte hochviskose verdünnte wäßrige Tensidlösung mit den erfindungsgemäß zu verwendenden Polymerisaten zu versetzen, um die Viskosität nachträglich zu erniedrigen.

Die erfindungsgemäßen Copolymerisate werden als Zusatz zu Wasch- und Reinigungsmitteln verwendet.

Die Wasch- und Reinigungsmittel enthalten als wesentliche Bestandteile außer den oben beschriebenen Polymerisaten mindestens ein anionisches Tensid, ein nichtionisches Tensid oder deren Mischungen. Die Wasch- und Reinigungsmittel können als Pulver oder als Flüssigformulierung vorliegen. Die erfindungsgemäß zu verwendenden Copolymerisate eignen sich insbesondere zur Herstellung von Flüssigwaschmittelformulierungen. Geeignete anionische Tenside sind beispielsweise Natriumalkylbenzolsulfonate, Fettalkoholsulfate und Fettalkoholpolyglykolethersulfate.

Einzelne Verbindungen dieser Art sind beispielsweise $C_8$- bis $C_{12}$-Alkylbenzolsulfonate, $C_{12}$- bis $C_{16}$-Alkansulfonate, $C_{12}$- bis $C_{16}$-Alkylsulfate, $C_{12}$- bis $C_{16}$-Alkylsulfosuccinate und sulfatierte ethoxylierte $C_{12}$- bis $C_{16}$-Alkanole. Als anionische Tenside eignen sich außerdem sulfatierte Fettsäurealkanolamide, Fettsäuremonoglyceride oder Umsetzungsprodukte von 1 bis 4 Mol Ethylenoxid mit primären oder sekundären Fettalkoholen oder Alkylphenolen. Weitere geeignete anionische Tenside sind Fettsäureester bzw. Fettsäureamide von Hydroxy- oder Aminocarbonsäuren bzw. -sulfonsäuren, wie beispielsweise die Fettsäuresarkoside, -glykolate, -lactate, -tauride oder -isothionate. Die anionischen Tenside können in Form der Natrium-, Kalium- und Ammoniumsalze sowie als lösliche Salze organischer Basen, wie Mono-, Di- oder Triethanolamin oder andere substituierter Amine vorliegen. Zu den anionischen Tensiden gehören auch die üblichen Seifen, d.h. die Alkalisalze der natürlichen Fettsäuren.

Als nichtionische Tenside (Nonionics) sind z.B. Anlagerungsprodukte von 3 bis 40, vorzugsweise 4 bis 20 Mol Ethylenoxid an 1 Mol Fettalkohol, Alkylphenol, Fettsäure, Fettamin, Fettsäureamid oder Alkansulfonamid verwendbar. Besonders wichtig sind die Anlagerungsprodukte von 5 bis 16 Mol Ethylenoxid an Kokos- oder Talgfettalkohole, an Oleylalkohol oder an synthetische Alkohole mit 8 bis 18, vorzugsweise 12 bis 18 C-Atomen, sowie an Mono- oder Dialkylphenole mit 6 bis 14 C-Atomen in den Alkylresten. Neben diesen wasserlöslichen Nonionics sind aber auch nicht bzw. nicht vollständig wasserlösliche Polyglykolether mit 1 bis 4 Ethylenglykoletherresten im Molekül von Interesse, insbesondere wenn sie zusammen mit wasserlöslichen nichtionischen oder anionischen Tensiden eingesetzt werden. Weiterhin sind als nichtionische Tenside die wasserlöslichen, 20 bis 250 Ethylenglykolethergruppen und 10 bis 100 Propylenglykolethergruppen enthaltenden Anlagerungsprodukte von Ethylenoxid an Polypropylenglykolether, Alkylendiaminopolypropylenglykol und Alkylpolypropylenglykole mit 1 bis 10 C-Atomen in der Alkylkette brauchbar, in denen die Polypropylenglykoletherkette als hydrophober Rest fungiert. Auch nichtionische Tenside vom Typ der Aminoxide oder Sulfoxide sind verwendbar.

Das Schaumvermögen der Tenside läßt sich durch Kombination geeigneter Tensidtypen steigern oder verringern. Eine Verringerung läßt sich ebenfalls durch Zusätze von nichttensidartigen organischen Substanzen erreichen.

Die flüssigen, wäßrigen Waschmittel enthalten 10 bis 50 Gew.-% an Tensiden. Sie können dabei ein anionisches oder nichtionisches Tensid in der angegebenen Menge enthalten. Es ist jedoch auch möglich, Mischungen aus anionischen und nichtionischen Tensiden einzusetzen. In einem solchen Fall wählt man den Gehalt an anionischen Tensiden im Flüssigwaschmittel von 10 bis 30 Gew.-% und den Gehalt an nichtionischen Tensiden im Flüssigwaschmittel von 5 bis 20 Gew.-%, bezogen auf die gesamte Waschmittelformulierung.

Die Polymerisate können auch in konzentrierten Flüssigwaschmitteln, Kompaktwaschmitteln und zeolithhaltigen Waschmitteln eingesetzt werden. Sie finden auch Anwendung in Schichtsilikaten enthaltenden Waschmitteln. Flüssigwaschmittel enthalten als wesentliche Komponente die gemäß Erfindung zu verwendenden Copolymerisate in Mengen von 0,1 bis 20, vorzugsweise 1 bis 10 Gew.-% sowie gegebenenfalls Wasser in Mengen von 10 bis 80.

Flüssigwaschmittel können außerdem zur Modifizierung gegebenenfalls noch weitere Stoffe enthalten. Hierzu gehören beispielsweise Alkohole, wie Ethanol, n-Propanol und Isopropanol. Diese Stoffe werden, falls sie zur Anwendung gelangen, in Mengen von 3 bis 8 Gew.-%, bezogen auf die gesamte Waschmittelformulierung, verwendet. Außerdem können die Flüssigwaschmittel gegebenenfalls Hydrotrope enthalten. Hierunter werden Verbindungen verstanden wie 1,2-Propandiol, Cumolsulfonat und Toluolsulfonat. Falls derartige Verbindungen zur Modifizierung der Flüssigwaschmittel eingesetzt werden, beträgt ihre Menge, bezogen auf das Gesamtgewicht des Flüssigwaschmittels, 2 bis 5 Gew.-%. In vielen Fällen hat sich zur Modifizierung auch ein Zusatz von Komplexbildnern als vorteilhaft erwiesen. Komplexbildner sind beispielsweise Ethylendiamintetraessigsäure, Nitrilotriacetat und Isoserindiessigsäure sowie Phosphonate, wie Aminotrismethylenphosphonsäure, Hydroxyethandiphosphonsäure, Ethylendiamintetramethylenphosphonsäure und deren Salze. Die Komplexbildner werden in Mengen von 0,1 bis 10 Gew.-%, bezogen auf das Flüssigwaschmittel, eingesetzt. Die Flüssigwaschmittel können außerdem Zitrate, Di- oder Triethanolamin, Trübungsmittel, optische Aufheller, Enzyme, Parfümöle und Farbstoffe enthalten. Diese Stoffe sind, falls sie zur Modifizierung der Flüssigwaschmittel verwendet werden, zusammen in Mengen bis zu 5 Gew.-% anwesend. Die Flüssigwaschmittel sind vorzugsweise phosphatfrei. Sie können jedoch auch Phosphate enthalten, z.B. Pentanatriumtriphosphat und/oder Tetrakaliumpyrophosphat. Falls Phosphate eingesetzt werden, beträgt der Anteil der Phosphate an der Gesamtformulierung des Flüssigwaschmittels 10 bis 25 Gew.-%, berechnet als Pentanatriumtriphosphat. Die Flüssigwaschmittel können auch Na-Aluminiumsilikat (Zeolith A) enthalten. Die davon eingesetzten Mengen betragen im allgemeinen 10 bis 30 Gew.-%. In strukturierten, zeolithhaltigen Flüssigwaschmitteln wirken die erfindungsgemäßen Copolymerisate aufgrund ihrer guten dispergierenden Eigenschaften homogenisierend und stabilisierend.

Die oben beschriebenen Flüssigwaschmittel haben gegenüber den pulverförmigen Waschmitteln den Vorteil, daß sie leicht dosierbar sind und bei niedrigeren Waschtemperaturen ein sehr gutes Fett- und Öllösevermögen bei fettverschmutzter Wäsche aufweisen. Flüssigwaschmittel enthalten hohe Anteile an Waschaktivsubstanzen, die die Schmutzentfernung aus dem Textilgewebe bereits bei Waschtemperaturen von 40 bis 60°C bewirken. Die dispergierenden Eigenschaften von Polymerisaten konnten bisher nicht in wäßrigen flüssigen Waschmitteln genutzt werden, weil in Folge hoher Elektrolytkonzentrationen in den Waschmitteln mit den Polymeren keine stabilen Lösungen erhalten werden konnten. Mit den erfindungsgemäß zu verwendenden Homo- und Copolymerisaten ist es nunmehr möglich, stabile wäßrige Lösungen von Flüssigwaschmitteln herzustellen und die Wascheigenschaften von Flüssigwaschmitteln deutlich zu verbessern. Die Wirksamkeit der erfindungsgemäß zu verwendenden Homo- und Copolymerisate in Flüssigwaschmitteln wird in den Beispielen mit Hilfe der Primär- und Sekundärwaschwirkung dieser Waschmittel demonstriert. Unter Primärwaschwirkung versteht man die eigentliche Schmutzentfernung vom Textilmateri-

EP 0 603 236 B1

al. Als Grad für die Schmutzentfernung wird dabei der Unterschied im Weißgrad zwischen dem ungewaschenen und dem gewaschenen Textilmaterial nach einer Wäsche bestimmt. Als textiles Testmaterial verwendet man Baumwoll-, Baumwoll/Polyester- und Polyester-Gewebe mit Standardanschmutzung. Nach jeder Wäsche wird der Weißgrad des Gewebes in % Remission in einem Photometer Elrepho 2000 der Firma Datacolor bestimmt.

Unter Sekundärwaschwirkung werden die Effekte verstanden, die durch die Wiederanlagerung des vom Gewebe abgelösten Schmutzes auf das Gewebe in der Waschflotte zustande kommen. Die Sekundärwaschwirkung kann erst nach mehreren Wäschen, z.B. 3, 5, 10 oder sogar erst 20 Wäschen sichtbar werden, die sich in einer zunehmenden Vergrauung (Redeposition bemerkbar macht), d.h. AnSammlung von Schmutz aus der Waschflotte auf dem Gewebe. Zur Bestimmung der Vergrauungsneigung wäscht man Standardschmutzgewebe zusammen mit weißem Testgewebe mehrfach und erneuert das Schmutzgewebe nach jeder Wäsche. Der von dem Schmutzgewebe abgelöste Schmutz, der während der Wäsche auf das weiße Testgewebe aufzieht, bewirkt dabei einen Abfall im Weißgrad, der gemessen wird. Die erfindungsgemäß in Waschmitteln zu verwendenden Homo- und Copolymerisate oder deren wasserlösliche Salze können auch zur Formulierung von pulverförmigen Waschmitteln eingesetzt werden.

Die Zusammensetzung von pulverförmigen Waschmittelformulierungen kann sehr unterschiedlich sein. Phosphatfreie Waschmittelformulierungen, besonders konzentrierte, pulverförmige Kompaktwaschmittel können neben den üblichen Tensidanteilen als Builder Zeolith und/oder Schichtsilikate in Form kristalliner oder amorpher pulverförmiger hydratisierter Natronwassergläser enthalten. Gleiches gilt für die Zusammensetzung von Reinigungsmittelformulierungen. Wasch- und Reinigungsmittelformulierungen enthalten üblicherweise Tenside und gegebenenfalls Builder. Diese Angaben gelten sowohl für flüssige als auch für pulverförmige Wasch- und Reinigungsmittelformulierungen. Beispiele für die Zusammensetzung von Waschmittelformulierungen, die in Europa, in den USA und in Japan gebräuchlich sind, findet man beispielsweise in Chemical and Engn. News, Band 67, 35 (1989) tabellarisch dargestellt sowie in Ullmanns Encyklopädie der technischen Chemie, Verlag Chemie, Weinheim 1983, 4. Auflage, Seiten 63-160.

Die Prozentangaben in den Beispielen sind Gew.-%. Die K-Werte wurden nach H. Fikentscher, Zellulosechemie, Band 13, 58-64 und 71-74 (1932) bestimmt, und zwar - falls nicht anders angegeben - in 1 gew.-%iger Lösung in Tetrahydrofuran bei 25°C.

Beispiele

In den Beispielen wurden folgende Abkürzungen verwendet:

HBVE: 4-Hydroxybutylvinylether
HBVE . x EO: Umsetzungsprodukt von 1 mol 4-Hydroxymethylvinylether mit x mol Ethylenoxid
Tensid A: Umsetzungsprodukt von 1 mol $C_{13}$-/$C_{15}$-Alkohol mit 7 mol Ethylenoxid
tBPP: tert.-Butylperpivalat
THF: Tetrahydrofuran
PEG 300: Polyethylenglykol mit einem Molgewicht von 300
FG: Feststoffgehalt

Waschmittel, die kristalline Schichtsilikate enthalten, werden beschrieben in: Seifen, Öle, Fette, Wachse, 116, 20 (1990), S. 805-808.

VEG: jodometrisch erfaßbare Vinyletherendgruppen im Copolymerisat
AS: Acrylsäure
VAc: Vinylacetat
HHVE: 6-Hydroxyhexylvinylether
MSE: Maleinsäurediethylether

Allgemeine Vorschrift zur Herstellung von Copolymerisaten aus 4-Hydroxybutylvinylether, ethoxyliertem 4-Hydroxybutylvinylether und Maleinsäureethylester.

Beispiele 1 bis 5

In einem 500 ml fassenden Rundkolben, der mit Rührer, Thermometer, einer Vorrichtung zum Arbeiten unter Inertgas und drei Zulaufgefäßen versehen ist, werden die in Tabelle 1 angegebenen Mengen an 4-Hydroxybutylvinylether, ethoxylierten 4-Hydroxybutylvinylether und Verdünnungsmittel (Umsetzungsprodukt von 1 Mol $C_{13}$-/$C_{15}$-Alkohol mit 7 Mol Ethylenoxid = Tensid A)) vorgelegt und mit 5 g Natriumhydrogencarbonat versetzt. Die vorgelegte Monomermischung wird dann unter Stickstoff auf 70°C erhitzt. Sobald diese Temperatur erreicht ist, beginnt man gleichzeitig mit der Zugabe der Zuläufe 1 und 2. Die Zulaufzeiten betragen jeweils 2 Stunden. Danach wird das Reaktionsgemisch noch weitere 2 Stunden bei der Temperatur weitergerührt. Man erhält 50 gew.-%ige Lösungen von Copolymerisaten in einem nichtionischen Tensid. Die Copolymerisate haben die in Tabelle 1 angegebenen K-Werte.

Tabelle 1

| Beispiel | HBVE [g] | HBVE.xEO | | Tensid A [g] | Zulauf 1 | | Zulauf 2 tBPP [g] | K-Wert |
|---|---|---|---|---|---|---|---|---|
| | | [g] | x | | MSE [g] | Tensid A [g] | | |
| 1 | 14 | 93 | 3 | 107 | 86 | 86 | 6 | 14 |
| 2 | 16 | 85 | 7 | 101 | 60 | 60 | 6 | 14 |
| 3 | 23 | 78 | 11 | 100 | 57 | 57 | 6 | 15 |
| 4 | 25 | 80 | 25 | 105 | 49 | 49 | 6 | 16 |
| 5 | 50 | 50 | 25 | 100 | 84 | 84 | 6 | 16 |

Beispiele 6-10

Diese Copolymerisate werden bei 70°C mit den in Tabelle 2 angegebenen Einsatzstoffen nach der Verfahrensweise gemäß den Beispielen 1 bis 5 hergestellt und anschließend einer alkalischen Nachbehandlung unterworfen. Man erhält 50 gew.-%ige Lösungen von Copolymerisaten in einem nichtionischen Tensid. Die Copolymerisate haben die in Tabelle 2 angegebenen K-Werte. Die 50 %igen Copolymerisatlösungen werden mit der in Tabelle 2 angegebenen Menge an Wasser versetzt und im Eisbad auf 5°C abgekühlt. Dann fügt man unter ständiger Kühlung die in Tabelle 2 angegebenen Mengen an 50 %iger wäßriger Natronlauge innerhalb von 30 Minuten zu und rührt das Gemisch noch 5 Stunden unter Kühlung im Eisbad und läßt es dann auf 20°C erwärmen. Die Zusammensetzung der so erhältlichen Copolymerisatlösungen ist in Tabelle 2 angegeben.

Tabelle 2

| Bsp. | Vorlage HBVE [g] | HBVE.xEO [g] | x | Ten-sid A [g] | Zulauf 1 MSE [g] | Tensid A | Zulauf 2 tBPP [g] | K-Wert | Nachbehandlung Wasser [g] | NaOH 50 %ig [g] | Zusammensetzung des Reaktionsgemisches Copolymer/Tensid A/ Wasser [g] |
|---|---|---|---|---|---|---|---|---|---|---|---|
| 6 | 50 | 50 | 3 | 100 | 111 | 111 | 6 | 16 | 300 | 18 | 29/29/42 |
| 7 | 50 | 50 | 7 | 100 | 98 | 98 | 6 | 15 | 300 | 18 | 27/27/46 |
| 8 | 50 | 50 | 11 | 100 | 91 | 91 | 6 | 15 | 300 | 18 | 28/28/44 |
| 9 | 23 | 78 | 11 | 101 | 57 | 57 | 6 | 15 | 200 | 12 | 30/30/40 |
| 10 | 25 | 80 | 25 | 105 | 49 | 49 | 6 | 16 | 300 | 18 | 22/22/56 |

Beispiel 11

In einem 500 ml fassenden Rundkolben, der mit Rührer, Thermometer, einer Vorrichtung für das Arbeiten unter Stickstoff und zwei Dosiereinrichtungen versehen ist, werden 50 g 4-Hydroxybutylvinylether,

13

50 g eines Umsetzungsproduktes von 4-Hydroxybutylvinylether mit 7 Mol Ethylenoxid und 100 g Polyethylenoxid mit einem Molekulargewicht von 300 vorgelegt und auf 70°C erwärmt. Sobald diese Temperatur erreicht ist, werden 39 g Acrylsäure und gleichzeitig aus der anderen Dosiereinrichtung 6 g tert.-Butylperpivalat innerhalb 1 Stunde zudosiert. Nach Beendigung der Acrylsäure- und Initiatorzugabe rührt man das Reaktionsgemisch noch 30 Minuten bei 75°C und gibt dann 50 g Wasser zu und erwärmt die Lösung auf eine Temperatur von 100°C. Durch Einleiten von Wasserdampf werden flüchtige Komponenten aus der Mischung entfernt. Danach läßt man das Reaktionsgemisch auf 20°C abkühlen und neutralisiert es durch Zugabe von 28 g festem, wasserfreien Natriumcarbonat. Durch 5-stündiges Rühren bei 20°C erhält man eine Lösung des neutralisierten Polymerisates in einer Mischung aus Wasser und Polyethylenglykol. Geringe Anteile an nichtgelöstem Natriumcarbonat werden über ein Filtertuch abfiltriert. Der Polymergehalt der Lösung beträgt 26 %. Das Copolymerisat hat einen K-Wert von 61 (gemessen in 1 %iger wäßriger Lösung bei 25°C).

Beispiel 12

Nach der im Beispiel 11 angegebenen Vorschrift wird ein Copolymerisat hergestellt, indem man zu einer Vorlage aus einer Mischung von 100 g eines Polyethylenglykols mit einem Molekulargewicht von 300, 20 g 4-Hydroxybutylvinylether und 80 g des Anlagerungsproduktes von 7 Mol Ethylenoxid an 1 Mol 4-Hydroxybutylvinylether als Zulauf 1 eine Mischung aus 28 g Acrylsäure und 28 g eines Polyethylenglykols mit einem Molekulargewicht von 300 und als Zulauf 2 3 g tert.-Butylperpivalat innerhalb von 1 Stunde zudosiert. Nach Zugabe von 50 g Wasser zu der Reaktionsmischung erwärmt man sie auf 100°C und entfernt flüchtige Komponenten durch Einleiten von Wasserdampf. Die Reaktionsmischung wird dann mit 19 g wasserfreiem Natriumcarbonat versetzt. Nach dem Filtrieren enthält man eine 28 %ige Copolymerisatlösung in einer Mischung aus Wasser und Polyethylenglykol. Das Copolymerisat hat in 1 %iger wäßriger Lösung bei 25°C einen K-Wert von 42.

Beispiele 13-16

In einem 500 ml fassenden Rundkolben, der mit Rührer, Thermometer, einer Vorrichtung für das Arbeiten unter Stickstoff und zwei Dosiereinheiten versehen ist, werden die in Tabelle 3 angegebenen Mengen an 4-Hydroxybutylvinylether und ethoxyliertem 4-Hydroxybutylether vorgelegt und unter Stickstoffatmosphäre auf eine Temperatur von 75°C erhitzt. Sobald diese Temperatur erreicht ist, beginnt man gleichzeitig die Zuläufe 1 und 2 zuzugeben. Die Zulaufzeiten betragen jeweils 1 Stunde. Nach Beendigung der Zuläufe werden dem Reaktionsgemisch ständig Proben entnommen und mittels Jodtitration auf Vinyletherendgruppen titriert. In Tabelle 3 sind die Konzentrationen an Vinyletherendgruppen in mmol nach einer Polymerisationszeit von 3 Stunden angegeben. Um die restlichen Vinylethergruppen zu zerstören, versetzt man das Copolymerisat mit 200 g Wasser und 1 g 30 %iger wäßriger Salzsäure und entfernt die flüchtigen Komponenten mit Hilfe einer Wasserdampfdestillation. Nach dem Abkühlen wird das Reaktionsgemisch durch Zugabe von 3 ml 25 %iger wäßriger Natronlauge neutralisiert. Die K-Werte der Copolymerisate sowie der Feststoffgehalt der Reaktionslösungen ist in Tabelle 3 angegeben. Die Copolymerisate enthalten keine nachweisbaren Vinylethergruppen mehr.

14

Tabelle 3

| Bsp. | Vorlage | | | Zulauf 1 | Zulauf 2 | Zulaufzeit | VEG | K-Wert | FG |
|---|---|---|---|---|---|---|---|---|---|
| | HBVE [g] | HBVE.xEO [g] | x | MSE [g] | tBPP [g] | [h] | [mmol/g] | | [%] |
| 13 | 16 | 85 | 7 | 60 | 6 | 5 | 0,18 | 18 | 40 |
| 14 | 25 | 80 | 25 | 49 | 6 | 4 | 0,13 | 22 | 43 |
| 15 | 50 | 50 | 25 | 84 | 6 | 5 | 0,05 | 23 | 37 |
| 16 | 50 | 50 | 50 | 78 | 6 | 5 | 0,11 | 25 | 34 |

Herstellung von Copolymerisaten aus 4-Hydroxyalkylvinylethern und ethoxylierten 4-Hydroxybutylvinylether durch kationisch initiierte Polymerisation

Beispiele 17-28

In einem 250 ml fassenden Dreihalskolben, der mit Rührer, Stickstoffeinlaß, Thermometer und Rückflußkühler mit Blasenzähler versehen ist, werden 0,15 g wasserfreie feinpulvrige Oxalsäure vorgelegt. Dann wird

15

jeweils die in Tabelle 4 angegebene Mischung aus 4-Hydroxybutylvinylether und ethoxyliertem Hydroxybutylvinylether in einer Portion zugegeben und bei 20°C gemischt, bis sich die Oxalsäure in der Monomermischung fein verteilt hat. Das Reaktionsgemisch wird dann auf 100°C erhitzt, wobei sich die Oxalsäure in der Monomermischung zu einer klaren Lösung auflöst. Gleichzeitig beginnt die exotherme Copolymerisation, die zu einem Temperaturanstieg der Reaktionsmischung innerhalb von 2 Minuten auf 120 bis 190°C führt. Nach Abklingen der Wärmeentwicklung kühlt man die Reaktionsmischung auf 20°C, gibt jeweils 1 g fein zerstoßendes Natriumhydrogencarbonat zu und suspendiert es in der Reaktionsmischung durch Rühren. Danach fügt man 100 g Wasser in einer Portion zu und entfernt die flüchtigen Anteile durch Wasserdampfdestillation. Nach dem Abkühlen auf 20°C erhält man eine klare bis weißlich trübe 30 %ige Lösung eines Copolymerisats in Wasser mit den in Tabelle 4 angegebenen Eigenschaften.

Tabelle 4

| Bsp. | HBVE [g] | HBVE · x EO [g] | x | max. erreichte Polymerisationstemp. [°C] | K-Wert | Trübungspunkt [°C] von 1 %igen wäßrigen Lösungen |
|---|---|---|---|---|---|---|
| 17 | 40 | 10 | 3 | 190 | 25 | 5 |
| 18 | 25 | 25 | 3 | 150 | 20 | 34 |
| 19 | 15 | 35 | 3 | 135 | 19 | 48 |
| 20 | 35 | 15 | 7 | 170 | 20 | 16 |
| 21 | 25 | 25 | 7 | 160 | 18 | 30 |
| 22 | 10 | 40 | 7 | 135 | 16 | 66 |
| 23 | 40 | 10 | 25 | 180 | 26 | 30 |
| 24 | 25 | 25 | 25 | 150 | 25 | 65 |
| 25 | 10 | 40 | 25 | 125 | 27 | 72 |
| 26 | 32,5 | 17,5 | 50 | 165 | 26 | 61 |
| 27 | 25 | 25 | 50 | 145 | 28 | 62 |
| 28 | 10 | 40 | 50 | 130 | 31 | 79 |

Beispiel 29

Wie zu den Beispielen 17-28 angegeben, polymerisiert man eine Monomermischung aus 15 g 4-Hydroxybutylvinylether, 35 g des Additionsproduktes von 3 Mol Ethylenoxid an 1 Mol 4-Hydroxybutylvinylether und 0,7 g 1,4-Butandioldivinylether mit dem Unterschied, daß man 1/5 der Monomermischung zusammen mit Oxalsäure auf eine Temperatur von 120 °C erwärmt und nach dem Start der Polymerisation die restliche Monomermenge mit einer solchen Geschwindigkeit zudosiert, daß die Temperatur der Reaktionsmischung während der Polymerisation auf 120 °C gehalten wird. Man erhält ein Copolymerisat mit einem K-Wert von 35. Der Trübungspunkt einer 1 %igen wäßrigen Lösung des Copolymerisates beträgt 25 °C.

Beispiel 30

Beispiel 29 wird mit der Ausnahme wiederholt, daß man die Copolymerisation in Abwesenheit von 1,4-Butandioldivinylether mit 5 g 4-Hydroxybutylvinylether und 45 g des Additionsproduktes von 3 Mol Ethylenoxid an 1 Mol 4-Hydroxybutylvinylether durchführt. Man erhält ein Copolymerisat mit einem K-Wert von 33. Eine 1 %ige wäßrige Copolymerisatlösung hat einen Trübungspunkt von 36 °C.

Beispiele 31-37

Nach der in Beispiel 29 gegebenen Herstellvorschrift werden die in Tabelle 8 angegebenen Einsatzstoffe kationisch copolymerisiert. Als Polymerisationsinitiator wurde in allen Fällen 0,15 g Oxalsäure verwendet. Nach Beendigung der Copolymerisation wurde jeweils 1 g Natriumhydrogencarbonat zur Neutralisation der Oxalsäure zugegeben. Wie im Beispiel 29 angegeben, wird auch bei der Herstellung der Polymeren 31-37 durch Zugabe von jeweils 100 g Wasser eine Polymerlösung hergestellt. Die Trübungspunkte 1 %iger wäßriger Lösungen sowie die K-Werte der Copolymeren sind in Tabelle 5 angegeben.

Tabelle 5

| Bsp. | HBVE . x EO | | HHVE [g] | DVE | Trübungspunkt [ °C] 1 %iger wäßr. Lösungen | K-Wert |
|------|------|------|------|------|------|------|
| | [g] | x | | | | |
| 31 | 45 | 3 | 5 | | 27 | 37 |
| 32 | 45 | 7 | 5 | 1,8 | 45 | 29 |
| 33 | 35 | 7 | 15 | 2,8 | 19 | 40 |
| 34 | 45 | 25 | 5 | | 66 | 32 |
| 35 | 35 | 25 | 15 | | 31 | 39 |
| 36 | 45 | 50 | 5 | 0,9 | 64 | 43 |
| 37 | 40 | 50 | 10 | 0,9 | 46 | 41 |

Herstellung nicht erfindungsgemäßer Polymerisate für die erfindungsgemäße Verwendung in Waschmitteln

Polymerisate 1 bis 3

Diese Polymerisate wurden nach der allgemeinen Herstellvorschrift für die Beispiele 1-5 mit den aus der Tabelle 6 ersichtlichen Mengen an Einsatzstoffen erhalten. Die K-Werte der Polymerisate sind ebenfalls in der Tabelle 6 angegeben.

Tabelle 6

| Bsp. | Vorlage | | Tensid A | Zulauf 1 | | Zulauf 2 | K-Wert |
|------|---------|---|----------|----------|----------|----------|--------|
| | HBVE . x EO | | | MSE | Tensid A | tBBP | |
| | [g] | x | | [g] | [g] | [g] | |
| 1 | 62 | 3 | 60 | 43 | 40 | 6 | 14 |
| 2 | 150 | 11 | 150 | 22 | 20 | 3 | 15 |
| 3 | 152 | 25 | 150 | 22 | 20 | 3 | 17 |

Polymerisat 4

Nach der allgemeinen Vorschrift für die Beispiele 6-10 wird ein Copolymerisat hergestellt, indem man 106 g des Additionsproduktes von 7 Mol Ethylenoxid an 1 Mol 4-Hydroxybutylvinylether in 106 g eines nichtionischen Tensids (Umsetzungsprodukt von 1 Mol $C_{13}$-/$C_{15}$-Alkohol mit 7 Mol Ethylenoxid) vorlegt und als Zulauf 1 eine Mischung aus 43 g Maleinsäurediethyleester und 43 g des genannten nichtionischen Tensids und als Zulauf 2 6 g tert.-Butylperpivalat zugibt. Man erhält ein Copolymerisat mit einem K-Wert von 14. Das Copolymerisat wird dann mit 100 g Wasser und 6 ml 50 %iger wäßriger Natronlauge versetzt, wobei die Estergruppen des Copolymerisates in Carboxylatgruppen überführt werden. Das Reaktionsgemisch besteht aus 29 % Copolymer, 29 % nichtionischem Tensid und 42 % Wasser.

Polymerisat 5

Wie bei Polymerisat 4 beschrieben, legt man ein Gemisch aus 150 g des Umsetzungsprodukt von 11 Mol Ethylenoxid mit 1 Mol 4-Hydroxybutylvinylether und 150 g des nichtionischen Tensids A vor, verwendet als Zulauf 1 eine Mischung aus 43 g Maleinsäurediethylester und 43 g des angegebenen Tensids und als Zulauf 2 6 g tert.-Butylperpivalat. Man erhält ein Copolymerisat mit einem K-Wert von 15, das anschließend mit 200 g Wasser und 10 g 50 %iger wäßriger Natronlauge behandelt wird. Die Reaktionsmischung besteht aus 24 % Copolymer, 24 % nichtionischem Tensid und 52 % Wasser.

Polymerisat 6

Nach der im Beispiel 11 angegebenen Vorschrift gibt man zu einer Vorlage aus 100 g des Additionsproduktes von 7 Mol Ethylenoxid an 1 Mol Hydroxybutylvinylether und 100 g Polyethylenglykol mit einem Molekulargewicht von 300 als Zulauf 1 eine Mischung aus 22 g Acrylsäure und 22 g eines Polyethylenglykols vom Molekulargewicht 300 und als Zulauf 2 2 g tert.-Butylperpivalat. Nach der Copolymerisation gibt man 50 g Wasser und 17 g wasserfreies Natriumcarbonat hinzu. Man erhält eine Polymerlösung mit einem Polymergehalt von 28 % in einer Mischung aus Wasser und Polyethylenglykol. Der K-Wert des Polymerisates beträgt 40.

Polymerisat 7

In der in Beispiel 11 beschriebenen Apparatur werden 20 g des Umsetzungsprodukts aus 4-Hydroxybutylvinylether mit 7 Mol Ethylenoxid mit 20 g Polyethylenglykol vom Molekulargewicht 300 und unter Stickstoff auf 70°C erwärmt. Dann dosiert man innerhalb 1 Stunde eine Lösung aus 90 g Vinylacetat und 3 g Acrylsäure in 90 g Polyethylenglykol eines Molekulargewichts von 300 zu. Gleichzeitig dosiert man dazu 3 g tert.-Butylperpivalat innerhalb von 1 Stunde. Nach Beendigung der Zuläufe wird das Reaktionsgemisch noch eine weitere Stunde bei 70°C gerührt, mit Wasser versetzt und flüchtige Anteile durch Einleiten von Wasserdampf entfernt. Nachdem man die Reaktionsmischung abgekühlt hat, wird sie durch Zugabe von Natriumcarbonat neutralisiert. Der K-Wert des Polymeren beträgt 17 (1 %ig in Wasser gemessen). Der Polymergehalt der Lösung beträgt 32 %.

Polymer 8 und 9

Gemäß der Herstellvorschrift für Polymer 7 werden die in Tabelle 6 angegebenen Komponenten copolymerisiert. Man erhält klare Copolymerisatlösungen mit den in Tabelle 7 angegebenen Eigenschaften.

Tabelle 7

| Polymer | Vorlage | | Zulauf 1 | | | Zulauf 2 | | Na$_2$CO$_3$ | FG | K-Wert |
| | HBVE . 7 EO [g] | PEG 300 [g] | AS [g] | PEG 300 [g] | VAC [g] | tBPP [g] | Wasser [g] | [g] | [%] | 1 %ig in Wasser gemessen |
|---|---|---|---|---|---|---|---|---|---|---|
| 8 | 50 | 50 | 7 | 50 | 50 | 3 | 50 | 6 | 28 | 44 |
| 9 | 80 | 80 | 13 | 50 | 20 | 3 | 50 | 11 | 32 | 45 |

EP 0 603 236 B1

Polymere 10-13

Nach der für die Beispiele 13-16 gegebenen allgemeinen Vorschrift werden die in Tabelle 8 angegebenen Stoffe polymerisiert. Die Eigenschaften der dabei erhältlichen Copolymerisate sind in der Tabelle 8 ebenfalls angegeben.

Tabelle 8

| Polymer | Vorlage HBVE.xEO | | Zulauf 1 MSE [g] | Zulauf 2 tBPP [g] | Zulaufzeit [h] | VEG [mmol/g] | K-Wert | FG [%] |
|---|---|---|---|---|---|---|---|---|
| | [g] | x | | | | | | |
| 10 | 106 | 7 | 43 | 6 | 5 | 0,13 | 19 | 40 |
| 11 | 112 | 11 | 32 | 6 | 5 | 0,27 | 18 | 38 |
| 12 | 114 | 25 | 32 | 6 | 5 | 0,07 | 18 | 45 |
| 13 | 100 | 50 | 10 | 7 | 6 | 0,05 | 24 | 19 |

Polymerisat 14

In der Apparatur von Beispiel 1-5 werden 1/10 einer Mischung, bestehend aus 122 g eines Additionsproduktes von 11 mol Ethylenoxid an 1 mol Methanol, 100 g eines Additionsproduktes von 7 mol Ethylenoxid an 1 mol 4-Hydroxybutylvinylether und 22 g Acrylsäure vorgelegt und mit 0,3 g tert.-Butylperpivalat versetzt. Man startet die Polymerisation durch Erwärmen auf 75°C und fügt die restliche Monomermischung so schnell zu, daß die Temperatur 80°C nicht übersteigt. Nachdem eine weitere Stunde bei 75°C gerührt worden ist, wird mittels Iodtitration der Vinylethergehalt auf 0,006 mol bestimmt. Man neutralisiert das Polymerisat durch Zugabe einer Lösung aus 40 g Natriumcarbonat-Decahydrat und 75 g Wasser. Die resultierende Polymerlösung wird auf einen Feststoffgehalt von 55 % eingestellt. Das nicht neutralisierte Polymerisat besitz einen K-Wert von 14.

Polymerisate 15-17

In Analogie der Beschreibung von Polymerisat 4 wird ein tensidfreies Polymerisat hergestellt, indem eine Mischung eines Additionsproduktes von Ethylenoxid an 4-Hydroxybutylvinylether und Maleinsäurediethylester hergestellt wird und diese Mischung mittels tert.-Butylperpivalat bei 75°C polymerisiert wird. Nach Zugabe von 100 g Wasser zu dem Polymerisat wird Wasserdampf in die Lösung eingeleitet und danach durch Zugabe von 25 %iger wäßriger Natronlauge bei 20°C das Polymerisat alkalisch nachbehandelt. Einsatzstoffe und Mengen sind folgender Tabelle zu entnehmen:

| Poly-mer | Zulauf 1 | | | Zulauf 2 | K-Wert | 25 %ige Natronlauge | FG |
|---|---|---|---|---|---|---|---|
| | HBVE*xEO | | MSE | tBPP | | | |
| | [g] | x | [g] | [g] | | [%] | [%] |
| 15 | 100 | 7 | 40 | 3 | 17 | 45 | 40 |
| 16 | 100 | 3 | 70 | 3 | 15 | 90 | 29 |
| 17 | 100 | 11 | 34 | 2 | 15 | 35 | 42 |

Polymerisat 18-20

In der Apparatur von Beispiel 1-5 werden 1/10 einer Mischung, bestehend aus dem Additionsprodukt von Ethylenoxid an 4-Hydroxybutylvinylether, Polyethylenoxid mit einem Molekulargewicht 300 und Acrylsäure bei 75°C vorgelegt und durch Zugabe von 1/10 der Initiatormenge zur Polymerisation initiiert. Die

20

restliche Monomermischung wird so schnell zudosiert, daß die Temperatur auf 80 °C gehalten werden kann. Nach Beendigung der Polymerisation wird der K-Wert des Polymeren bestimmt und das Polymere durch Zugabe von stöchiometrischen Mengen an wäßriger Sodalösung quantitativ neutralisiert. Durch Verdünnen mit Wasser resultiert eine klare Lösung mit den angegebenen Polymergehalten:

| Poly-merisat | Zulauf 1 HBVE*xEO [g] | x | AS [g] | PEG300 [g] | Zulauf 2 tBPP [g] | K-Wert | Polymer-gehalt [%] |
|---|---|---|---|---|---|---|---|
| 18 | 100 | 3 | 29 | 129 | 3 | 16 | 25 |
| 19 | 100 | 11 | 15 | 115 | 3 | 12 | 26 |
| 20 | 100 | 11 | 30 | 130 | 3 | 14 | 26 |

Hydrolyse von Polyacetalen

Die gemäß den Beispielen 30, 32, 34 und 36 erhaltenen Copolymeren wurden auf hydrolytischen Abbau untersucht. Hierzu wurde die Viskositätsabnahme von 5 %igen Lösungen der Polymerisate in Wasser bei den entsprechenden pH-Werten verfolgt. Als Meßgerät wurde ein Ubbelohde-Viskosimeter verwendet. Die Messungen wurden bei 25 °C durchgeführt. Folgende pH-Werte wurden eingestellt:

pH von 2,5: 1 %ige wäßrige Essigsäure

pH von 4,6: äquimolare Mischung aus Essigsäure und Natriumacetat

pH von 5,3: Zugabe von 0,1 %iger Essigsäure

pH von 6,2: Zugabe von 0,1 %iger Essigsäure.

Die Abnahme der Auslaufzeit im Viskosimeter bei 25 °C wurde durch die Halbwertszeit: $T_{halb}$ und des Endwertes der Auflaufzeit (Zeit für die völlige Depolymerisation): $T_{ende}$ charakterisiert. Folgende Hydrolysezeiten wurden ermittelt:

Tabelle 9

Hydrolyse von Copolymerisaten, erhalten nach den Beispielen 30, 32, 34 und 36

| Copolymerisat nach Beispiel | pH = 2,5 | | pH = 4,6 | | pH = 5,3 | | pH = 6,2 | |
|---|---|---|---|---|---|---|---|---|
| | thalb [min] | tende [min] | thalb [Std.] | tende [Std.] | thalb [Std.] | tende [Std.] | thalb [Tage] | tende [Tage] |
| 30 | 8 | 90 | 1 | 24 | - | - | - | - |
| 32 | 8 | 120 | 2 | 48 | 14 | 100 | 4 | 14 |
| 34 | 8 | 120 | 1 | 24 | 2 | 30 | 2 | >14 |
| 36 | 9 | 240 | 2 | 20 | - | - | 10 | >14 |

Anwendungstechnische Beispiele

Beispiele 38-42

Man stellt eine Mischung aus dem wasserfreien Tensid A (Additionsprodukt von 7 Mol Ethylenoxid an 1 Mol eines $C_{13}/C_{15}$-Alkoholgemisches) und dem oben beschriebenen Polymer 4 her. Der Anteil von Polymer 4 in der Mischung beträgt 5 %. In Tabelle 10 sind die Viskositäten der beschriebenen Mischung aus Tensid A und Polymer 4 bei unterschiedlichen Gehalten an Wasser gegeben. Wie daraus ersichtlich ist, wirkt Polymer 4 als Viskositätserniedriger für das wasserhaltige Tensid A.

```
Tabelle 10

Bestimmung der viskositätserniedrigenden Wirkung von Polymer 4

Meßapparatur: Brookfield-Viskosimeter
```

| Bsp. | Wasser-gehalt [%] | Spindel Nr. | Drehzahl (U/min) | Viskosität [mPas] Tensid A (Vergleich) | Mischung aus 95 % Tensid A und 5 % Polymer erfindungsgemäß |
|---|---|---|---|---|---|
| 38 | 0 | 1 | 60 | 65 | 65 |
| 39 | 20 | 4 | 6 | 46000 | 90 |
| 40 | 40 | 4 | 6 | 25000 | 2800 |
| 41 | 60 | 4 | 3 | 158000 | 744 |
| 42 | 80 | 3 | 60 | 1000 | 420 |

Beispiele 43-46

Eine 40 %ige wäßrige Lösung des Tensids A wird mit den in Tabelle 1 angegebenen Mengen an Polymer 4 versetzt und jeweils die Viskosität gemessen. Wie aus der Tabelle 11 zu entnehmen ist, bewirkt ein Zusatz von Polymer 4 eine starke Reduzierung der Viskosität der wäßrigen Lösung des Tensids A.

Tabelle 11

| Beispiel | Vergleichsbeispiel | Einsatzmenge Polymer 4, bezogen auf Tensid A [Gew.-%] | Viskosität [mPas] |
|---|---|---|---|
|  | 1 | 0 | 158000 |
| 43 |  | 1 | 12800 |
| 44 |  | 2,5 | 11340 |
| 45 |  | 5 | 744 |
| 46 |  | 10 | 780 |

Beispiele 47-50

Man legt eine wäßrige Lösung vor, die das Polymer 4 in den in Tabelle 12 angegebenen Konzentrationen enthält und trägt soviel nichtionisches Tensid unter Rühren ein, daß eine 40 %ige wäßrige Lösung an Tensid A resultiert. Die Viskositäten der erhaltenen Mischungen sind in Tabelle 12 angegeben.

Tabelle 12

| Beispiel | Vergleichsbeispiel | Einsatzmenge | Spindel Nr. | Schergeschw. [U/min] | Viskosität [mPas] |
|---|---|---|---|---|---|
| | 1 | 0 | 4 | 3 | 158000 |
| 47 | | 0,5 | 4 | 6 | 15000 |
| 48 | | 1,0 | 3 | 12 | 2500 |
| 49 | | 2,0 | 3 | 30 | 1000 |
| 50 | | 4,0 | 3 | 30 | 640 |

Beispiel 51

a) Eine 5 %ige Lösung des Polymerisats 4 in wasserfreiem Tensid A wird durch Zugabe von Wasser auf 40 Gew.-% verdünnt und die Viskosität der Mischung gemessen. Sie beträgt 744 mPas.

b) Das nicht hydrolysierte Polymerisat 4, d.h. das durch radikalische Polymerisation des Additionsproduktes von 7 Mol Ethylenoxid an 1 Mol Hydroxybutylvinylether und Maleinsäurediethylester erhaltene Copolymerisat, wird in Form einer 5 %igen Lösung in wasserfreiem Tensid A durch Zugabe von Wasser auf 40 Gew.-% verdünnt. Die Viskosität dieser Mischung beträgt 10.260 mPas.

Wie aus dem Vergleichsbeispiel 1 hervorgeht, beträgt dagegen die Viskosität einer 40 %igen wäßrigen Lösung des Tensids A ohne Polymerzusatz 158.000 mPas.

Aufgrund der viskositätserniedrigenden Wirkung sind die erfindungsgemäß zu verwendenden Polymeren wichtige Hilfsmittel bei der Herstellung phosphatreduzierter und phosphatfreier Wasch- und Reinigungsmittel. Durch die Verwendung dieser Hilfsmittel gelingt es, die Slurry-Konzentration im Crutcher auf mindestens 80 % anzuheben. Dies bedeutet eine bessere Wirtschaftlichkeit durch günstigere Auslastung des Sprühturmes sowie eine Einsparung an Energie, weil weniger Wasser verdampft werden muß. Die homogenisierende und viskositätserniedrigende Wirkung der erfindungsgemäß zu verwendenden Polymerisate wird im folgenden durch Viskositätsmessungen an Waschmittelformulierungen veranschaulicht. Als Meßgerät dient ein Rheometer der Fa. Physika. Meßsystem ist ein Z 3 DIN-Typ. Als Waschmittelslurry wird eine Aufschlämmung von 80 Gew.-% Waschmittelbestandteilen und 20 Gew.-% Wasser verwendet. Als viskositätserniedrigende Zusätze werden die in Tabelle 13 jeweils angegebenen Polymerisate in einer Menge von 2 Gew.-%, bezogen auf die Waschmittelformulierung, eingesetzt.

Das Waschmittel zur Herstellung des Slurry setzt sich folgendermaßen zusammen:

10 Gew.-% Dodecylbenzolsulfonat in Form des Natriumsalzes

6 Gew.-% Tensid A

30 Gew.-% Zeolith A

10 Gew.-% Soda

5 Gew.-% Natriummetasilikat mit 5 $H_2O$ und

39 Gew.-% Natriumsulfat.

Alle oben aufgeführten Waschmittelbestandteile und das in Tabelle 13 jeweils angegebene Polymerisat wurden bei 60°C mit Hilfe eines Flügelrührers in Wasser eingerührt, so daß eine Mischung, bestehend aus

80 Gew.-Teilen der oben beschriebenen Waschmittelbestandteile,

18 Gew.-Teilen Wasser und

2 Gew.-Teilen Polymer

entstand. Die Viskositäten der Slurries wurden bei einer Schwergeschwindigkeit von 45 Sekunden[-1] gemessen. Die Ergebnisse sind in Tabelle 13 angegeben.

EP 0 603 236 B1

Tabelle 13

| Bsp. | Vergleichsbeispiel | Zusatz | Viskosität [mPas] | visuelles Aussehen der Slurries |
|---|---|---|---|---|
| | 2 | ohne Polycarboxylat [1] | 28700 | sehr pastös |
| | 3 | | 4130 | pastös, nicht homogen |
| | | Polymerisat erhlt. nach Beispiel | | |
| 51 | | 9 | 1135 | niedrigviskos, homogen |
| 52 | | 6 | 1430 | niedrigviskos, homogen |
| 53 | | 7 | 1380 | niedrigviskos, homogen |
| 54 | | 10 | 1590 | niedrigviskos, homogen |
| 55 | | 12 | 2100 | fließfähig, homogen |
| | | Polymerisat | | |
| 56 | | 6 | 828 | niedrigviskos, homogen |
| 57 | | 14 | 437 | niedrigviskos, homogen |
| 58 | | 15 | 126 | niedrigviskos, homogen |
| 59 | | 16 | 90 | niedrigviskos, homogen |
| 60 | | 17 | 160 | niedrigviskos, homogen |
| 61 | | 18 | 170 | niedrigviskos, homogen |
| 62 | | 19 | 640 | niedrigviskos, homogen |
| 63 | | 20 | 430 | niedrigviskos, homogen |

[1] Als Polycarboxylat wurde ein handelsübliches Copolymer aus Acrylsäure und Maleinsäure mit einem Molekulargewicht von 70.000 verwendet.

Aus den Meßwerten ist deutlich zu erkennen, daß die Polymerisate homogenisierende und viskositätserniedrigende Wirkung auf die Waschmittelslurries besitzen.

In den folgenden Beispielen wird der Einfluß der erfindungsgemäß in Waschmitteln zu verwendenden Homo- und Copolymerisate auf die Primärwaschwirkung und Vergrauung demonstriert. Die einschlägigen Versuche wurden unter folgenden Bedingungen durchgeführt:

| | |
|---|---|
| Waschgerät | Launder-o-meter |
| Waschtemperatur | 60 °C |
| Wasserhärte | 3 mmol Ca/1 = 16,8 °d Verhältnis Ca:Mg 3:1 |
| Waschzeit | 30 min (einschl. Aufheizzeit) |
| Waschzyklen | 4 |
| Waschmitteldosierung | 6 g/l |
| Flottenverhältnis | 1:14,3 |

Gewebe

Weißgewebe: Baumwolle/Polyester-Geweber Polyester-Gewebe
Schmutzgewebe: WKF 20 D (Wäschereiforschung Krefeld) (wird nach jeder Wäsche erneuert)
Weißgradmessung mit Elrepho 2000 der Firma Datacolorin % Remission
Weißgrad der ungewaschenen Gewebe:

| | |
|---|---|
| Baumwolle/Polyester | 80,4 |
| Polyester | 78,0 |
| WFK 20 D | 37,8 |

Angegeben sind jeweils die Weißgraddifferenzen auf den einzelnen Geweben vor und nach der Wäsche. Je größer die Weißgraddifferenz auf dem Schmutzgewebe WFK 20 D ist, um so höher ist die Primärwaschwirkung. Je kleiner die Differenzen auf den Weißgeweben, um so besser ist die Vergrauungsinhibierung.

Zum Vergleich wurde eine polymerisatfreie Waschmittelformulierung getestet.

Formulierung A:

10 % Natriumdodecylbenzolsulfonat, 50 %ig in Wasser
3 % des Reaktionsproduktes aus 1 Mol $C_{13}/C_{15}$-Oxoalkohol und
7 Mol Ethylenoxid (Tensid A)
2 % Polypropylenglykol MW 600
77 % Wasser
8 % Polymerisat gemäß Tabelle 14 bzw. 15.

Die bezüglich der Vergrauung und der Primärwaschwirkung bei Einsatz der erfindungsgemäß zu verwendenden Polymeren erzielten Effekte sind in den Tabellen 14 und 15 angegeben. Wie daraus zu entnehmen ist, verbessern die erfindungsgemäßen Polymeren und die erfindungsgemäß zu verwendenden Polymeren die Primärwaschwirkung der Waschmittelformulierung deutlich. Gleichzeitig wird teilweise auch eine Verbesserung der Vergrauungsinhibierung beobachtet. Alle gemäß Erfindung zu verwendenden Polymerisate waren ohne Probleme in die Waschmittelformulierung A einarbeitbar und führten im Gegensatz zu der Formulierung, die ein Polycarboxylat enthielt, zu stabilen, homogenen Lösungen.

Tabelle 14

| Bsp. | Zusatz von Polymer hergestellt nach Beispiel Nr. | Polymer Nr. | Primärwaschwirkung WFK 20 D | Vergrauung Polyester | Vergrauung PES/ B-wolle |
|---|---|---|---|---|---|
| 64 | | 1 | 20,7 | 0,9 | 13,3 |
| 65 | | 2 | 19,1 | 0,1 | 13,0 |
| 66 | | 3 | 20,0 | 1,0 | 12,5 |
| 67 | 1 | | 21,1 | 2,4 | 12,6 |
| 68 | 2 | | 22,6 | 1,1 | 12,9 |
| 69 | 3 | | 23,0 | 0,7 | 11,9 |
| 70 | 4 | | 22,2 | 0,7 | 11,9 |
| 71 | 5 | | 23,7 | 3,4 | 14,8 |
| 72 | 6 | | 21,2 | 1,2 | 11,7 |
| 73 | 7 | | 19,4 | 0,7 | 10,7 |
| 74 | 8 | | 19,4 | 0,7 | 11,6 |
| 75 | 9 | | 20,2 | 1,9 | 10,8 |
| 76 | 10 | | 20,7 | 1,6 | 11,1 |
| 77 | | 4 | 18,9 | 2,8 | 12,0 |
| 78 | | 5 | 18,3 | 3,0 | 13,3 |
| 79 | | 7 | 16,4 | 1,0 | 7,9 |
| 80 | | 8 | 17,8 | 0,5 | 8,6 |
| 81 | | 9 | 17,5 | 0,2 | 10,2 |
| 82 | | 10 | 15,2 | 0,5 | 8,3 |
| 83 | | 11 | 16,7 | 0,9 | 6,5 |
| 84 | | 12 | 17,4 | 1,0 | 6,8 |
| 85 | | 13 | 15,8 | 0,4 | 5,9 |
| 86 | 13 | | 16,8 | 1,2 | 7,5 |
| 87 | 14 | | 16,2 | 1,5 | 7,4 |
| 88 | 15 | | 16,1 | 0,8 | 7,3 |
| 89 | 16 | | 17,4 | 0,9 | 7,6 |
| 90 | 17 | | 22,2 | − | 13,3 |
| 91 | 18 | | 21,2 | − | 8,5 |
| 92 | 19 | | 20,8 | − | 10,7 |
| 93 | 20 | | 21,8 | − | 10,1 |
| 94 | 21 | | 22,0 | − | 8,4 |
| 95 | 22 | | 20,6 | − | 9,6 |
| 96 | 23 | | 28,0 | − | 11,9 |

Tabelle 14 (Fortsetzung)

| Bsp. | Zusatz von Polymer hergestellt nach Beispiel Nr. | Polymer Nr. | Primärwasch- wirkung WFK 20 D | Vergrauung Poly- ester | PES/ B-wolle |
|---|---|---|---|---|---|
| 97 | 24 | 24,8 | – | 10,5 | |
| 98 | 25 | 22,2 | – | 7,2 | |
| 99 | 26 | 26,5 | – | 11,2 | |
| 100 | 27 | 26,3 | – | 11,5 | |
| 101 | 28 | 19,1 | – | 10,0 | |
| 102 | 30 | 21,6 | | 4,4 | 12,1 |
| 103 | 29 | 24,5 | | 12,3 | 13,6 |
| 104 | 31 | 22,2 | | 6,5 | 10,3 |
| 105 | 32 | 17,8 | | 1,3 | 8,0 |
| 106 | 33 | 24,2 | | 4,3 | 11,4 |
| 107 | 34 | 16,2 | | 2,0 | 8,3 |
| 108 | 35 | 22,1 | | 1,5 | 7,8 |
| 109 | 36 | 17,9 | | 5,6 | 11,2 |
| 110 | 37 | 18,9 | | 6,1 | 11,4 |
| Vergleichs- beispiel | | | | | |
| 4 | ohne Zusatz | 14,7 | | 2,9 | 10,3 |
| 5 | Zusatz von Tensid A in einer Menge von 4 % | 16,9 | | 6,9 | 15,6 |

## Patentansprüche

1. Copolymerisate von Hydroxyalkylvinylethern, dadurch gekennzeichnet, daß sie erhältlich sind durch kationisch oder radikalisch initiierte Copolymerisation von
   (a) 99 bis 1 Gew.-% Hydroxyalkylvinylethern,
   (b) 1 bis 99 Gew.-% Additionsprodukten von $C_2$- bis $C_4$-Alkylenoxiden an Hydroxyalkylvinylether und/oder Polytetrahydrofuranvinylether und
   (c) 0 bis 98 Gew.-% anderen copolymerisierbaren Monomeren.

2. Copolymerisate nach Anspruch 1, dadurch gekennzeichnet, daß sie erhältlich sind durch radikalisch initiierte Copolymerisation von
   (a) 99 bis 1 Gew.-% Hydroxybutylvinylether,
   (b) 1 bis 99 Gew.-% Additionsprodukten von 1 bis 100 Mol Ethylenoxid an 1 Mol Hydroxybutylvinylether und
   (c) 0 bis 98 Gew.-% copolymerisierbaren monoethylenisch ungesättigten Monomeren.

3. Copolymerisate nach Anspruch 1, dadurch gekennzeichnet, daß sie erhältlich sind durch kationisch initiierte Copolymerisation von
   (a) 99 bis 1 Gew.-% Hydroxybutylvinylether,
   (b) 1 bis 99 Gew.-% Additionsprodukten von 1 bis 100 Mol Ethylenoxid an 1 Mol Hydroxylbutylvinylether und

(c) 0 bis 98 Gew.-% copolymerisierbaren Monomeren aus der Gruppe der Divinylether, der mindestens 2 OH-Gruppen aufweisen Verbindungen und deren Gemischen.

4. Verwendung von Copolymerisaten nach Anspruch 1 sowie von kationisch oder radikalisch polymerisierten Hydroxyalkylverbindungen, die die Monomeren (a) oder (b) als alleinige Monomere oder in Mischung mit anderen copolymerisierbaren Monomeren einpolymerisiert enthalten, als Viskositätserniedriger für Tenside.

5. Verwendung von Copolymerisaten nach Anspruch 1 sowie von kationisch polymerisierten Hydroxyalkylvinylethern, die die Monomeren (a) oder (b) als alleinige Monomere oder in Mischung mit anderen copolymerisierbaren Monomeren einpolymerisiert enthalten, als Zusatz zu Wasch- und Reinigungsmitteln in Mengen von 0,1 bis 50 Gew.-%

## Claims

1. A copolymer of a hydroxyalkyl vinyl ether, wherein said copolymer is obtainable by cationic or free radical polymerization of
   (a) from 99 to 1% by weight of hydroxyalkyl vinyl ether,
   (b) from 1 to 99% by weight of an adduct of a $C_2$-$C_4$-alkylene oxide with hydroxyalkyl vinyl ether and/or polytetrahydrofuran vinyl ether and
   (c) from 0 to 98% by weight of other copolymerizable monomers.

2. A copolymer as claimed in claim 1, which is obtainable by free radical copolymerization of
   (a) from 99 to 1% by weight of hydroxybutyl vinyl ether,
   (b) from 1 to 99% by weight of an adduct of from 1 to 100 mol of ethylene oxide with 1 mol of hydroxybutyl vinyl ether and
   (c) from 0 to 98% by weight of copolymerizable monoethylenically unsaturated monomers.

3. A copolymer as claimed in claim 1, which is obtainable by cationic copolymerization of
   (a) from 99 to 1% by weight of hydroxybutyl vinyl ether,
   (b) from 1 to 99% by weight of an adduct of from 1 to 100 mol of ethylene oxide with 1 mol of hydroxybutyl vinyl ether and
   (c) from 0 to 98% by weight of the copolymerizable monomers selected from the group consisting of divinyl ether, compounds having 2 or more OH groups and mixtures thereof.

4. Use of a copolymer as claimed in claim 1 and of a hydroxyalkyl compound polymerized by cationic or free radical polymerization, which contains monomers (a) or (b) as sole monomers or as a mixture with other copolymerizable monomers in the form of polymerized units, as a viscosity depressant for surfactants.

5. Use of a copolymer as claimed in claim 1 and of a cationically polymerized hydroxyalkyl vinyl ether which contains monomers (a) or (b) as sole monomers or as a mixture with other copolymerizable monomers in the form of polymerized units, as an additive for detergents and cleaning agents in amounts of from 0.1 to 50% by weight.

## Revendications

1. Copolymères d'oxydes de vinyle et d'hydroxyalkyle, caractérises en ce qu'ils sont obtenus par copolymérisation cationique ou radicalaire de
   a) 99 à 1% en poids d'oxydes de vinyle et d'hydroxyalkyle,
   b) 1 à 99% en poids de produits d'addition d'oxydes d'alkylène en $C_2$-$C_4$ à des oxydes de vinyle et d'hydroxyalkyle et/ou à des poly(oxydes de vinyle de tétrahydrofuranne) et
   c) 0 à 98% en poids d'autres monomères copolymérisables.

2. Copolymères selon la revendication 1, caractérisés en ce qu'ils sont obtenus par copolymérisation radicalaire de
   a) 99 à 1% en poids d'oxyde de vinyle et d'hydroxybutyle,

b) 1 à 99% en poids de produits d'addition de 1 à 100 moles d'oxyde d'éthylène à 1 mole d'oxyde de vinyle et d'hydroxybutyle et

c) 0 à 98% en poids de monomères à insaturation monoéthylénique copolymérisables.

3. Copolymères selon la revendication 1, caractérisés en ce qu'ils sont obtenus par copolymérisation cationique de

a) 99 à 1% en poids d'oxyde de vinyle et d'hydroxybutyle,

b) 1 à 99% en poids de produits d'addition de 1 à 100 moles d'oxyde d'éthylène à 1 mole d'oxyde de vinyle et d'hydroxybutyle et

c) 0 à 98% en poids de monomères copolymérisables du groupe des éthers divinyliques de composés renfermant au moins 2 groupements OH et de leurs mélanges.

4. Utilisation de copolymères selon la revendication 1, ainsi que de composés hydroxyalkyliques obtenus par polymérisation cationique ou radicalaire et contenant en liaison polymère les monomères a) ou b) en tant que seuls monomères ou en mélange avec d'autres monomères copolymérisables, comme agents abaissant la viscosité pour des tensio-actifs.

5. Utilisation de copolymères selon la revendication 1, ainsi que d'oxydes de vinyle et d'hydroxyalkyle obtenus par polymérisation cationique et contenant en liaison polymère les monomères a) ou b) en tant que seuls monomères ou en mélange avec d'autres monomères copolymérisables, comme additifs à des produits de lavage et de nettoyage, dans des proportions de 0,1 à 50% en poids.